(19) Europäisches Patentamt
European Patent Office
Office européen des brevets

(11) **EP 4 031 640 B1**

(12) **EUROPÄISCHE PATENTSCHRIFT**

(45) Veröffentlichungstag und Bekanntmachung des Hinweises auf die Patenterteilung:
**14.06.2023   Patentblatt 2023/24**

(21) Anmeldenummer: **21823309.6**

(22) Anmeldetag: **06.12.2021**

(51) Internationale Patentklassifikation (IPC):
**C10G 2/00** *(2006.01)*      **B01D 53/00** *(2006.01)*
**C01B 3/00** *(2006.01)*      **C07C 1/00** *(2006.01)*

(52) Gemeinsame Patentklassifikation (CPC):
**C10G 2/32; C25B 1/042; C25B 15/081;**
B01D 53/1475; B01D 53/265; B01D 2256/22;
B01D 2257/80; B01D 2258/06; Y02E 60/36;
Y02P 20/151

(86) Internationale Anmeldenummer:
**PCT/EP2021/084419**

(87) Internationale Veröffentlichungsnummer:
**WO 2022/122663 (16.06.2022 Gazette 2022/24)**

(54) **ANLAGE UND VERFAHREN ZUR HERSTELLUNG VON SYNTHETISCHEN KRAFTSTOFFEN OHNE FRISCHWASSER**

SYSTEM AND METHOD FOR PRODUCING SYNTHETIC FUELS WITHOUT FRESH WATER

INSTALLATION ET PROCÉDÉ DE FABRICATION DE COMBUSTIBLES SYNTHÉTIQUES SANS EAU DOUCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.12.2020   EP 20212138**

(43) Veröffentlichungstag der Anmeldung:
**27.07.2022   Patentblatt 2022/30**

(73) Patentinhaber:
• **EDL Anlagenbau Gesellschaft mbH**
  **04158 Leipzig (DE)**
• **Haid, Michael**
  **40885 Ratingen (DE)**

(72) Erfinder:
• **HAID, Michael**
  **40885 Ratingen (DE)**
• **GAMBERT, Rolf**
  **04668 Grimma (DE)**

(74) Vertreter: **Henkel & Partner mbB**
**Patentanwaltskanzlei, Rechtsanwaltskanzlei**
**Maximiliansplatz 21**
**80333 München (DE)**

(56) Entgegenhaltungen:
**WO-A2-2008/044056     GB-A- 2 468 483**

**Beschreibung**

Die vorliegende Erfindung betrifft eine Anlage sowie ein Verfahren zur Herstellung von synthetischen Kraftstoffen, insbesondere von Flugturbinenkraftstoff, Diesel und/oder Benzin.

Es gibt eine Reihe verschiedener Verfahren zur Herstellung von Kraftstoffen, wie Flugturbinenkraftstoff, Diesel, Benzin oder dergleichen. Solche Verfahren basieren überwiegend auf der Aufbereitung von fossilen Rohstoffen, wie beispielsweise auf der Raffination von Erdöl, auf der Verflüssigung von Kohle oder auf der Synthese von Kraftstoffen aus Erdgas, Wasser und Sauerstoff. Die Synthese von Kraftstoffen aus Erdgas, Wasser und Sauerstoff wird auch als "gas-to-liquids"-Verfahren bezeichnet. Bei diesen Verfahren wird aus Erdgas, Wasser und Sauerstoff zunächst Wasserstoff und Kohlenmonoxid umfassendes Synthesegas hergestellt, welches dann in einer Fischer-Tropsch-Synthese zu Kohlenwasserstoffen umgewandelt wird, die vornehmlich aus langkettigen Normalparaffinen bestehen. Diese Kohlenwasserstoffe werden dann durch Cracken und Isomerisierung zu synthetischen Kraftstoffen umgesetzt.

Ein dazu ähnliches Verfahren ist die als "power-to-liquids" bezeichnete Umwandlung von elektrischer Energie zu synthetischen Kraftstoffen. Hierzu werden Wasser und Kohlendioxid zu Synthesegas umgesetzt, welches dann ähnlich wie in den "gas-to-liquids"-Verfahren zu synthetischen Kraftstoffen weiterverarbeitet werden. Ein wesentlicher Nachteil der "gas-to-liquids"-Verfahren und der "power-to-liquids" Verfahren ist es, dass erhebliche Mengen an Frischwasser benötigt werden. Wasser ist jedoch in der geforderten Reinheit ein teurer Rohstoff. Zudem werden in den bekannten Verfahren vergleichsweise hohe Mengen an in den Verfahren ungenutzten Abgasen und Abwasser erzeugt, welche umweltpolitisch unerwünscht sind.

In der WO 2008/044056 A2 wird ein Verfahren zur Herstellung von Treibstoff, wie Kerosin und Diesel, beschrieben, bei dem eine erneuerbare Energiequelle, wie beispielsweise Solarenergie, elektrische Energie bereitstellt, welche in einer Hydrolysevorrichtung eingesetzt wird, um Wasser in Wasserstoff und Sauerstoff zu spalten. Zudem wird die elektrische Energie genutzt, um in einer Trennvorrichtung Kohlendioxid aus Atmosphärenluft abzutrennen, wobei die Kohlendioxidabtrennung kryogen erfolgen kann, wie beispielsweose durch Absorption in Kalk oder unter Verwendung einer semipermeablen Membran. Ein dazu ähnliches Verfahren ist auch aus der GB 2,468,483 A bekannt.

Ausgehend davon lag der vorliegenden Erfindung die Aufgabe zugrunde, eine Anlage und ein Verfahren zur Herstellung von synthetischen Kraftstoffen bereitzustellen, welche(s) ohne oder mit einer allenfalls geringen Menge an Frischwasserzufuhr und mit dem Anfall nur sehr geringfügiger Mengen an ungenutzten Abgasen und Abwasser betrieben werden kann, welches eine erhöhte Ausbeute von synthetischen Kraftstoffen ergibt, und, welches dennoch ausschließlich mit elektrischer Energie und bevorzugt erneuerbarer Energie betrieben werden kann.

Erfindungsgemäß wird diese Aufgabe gelöst durch eine Anlage zur Herstellung von synthetischen Kraftstoffen, insbesondere von Flugturbinenkraftstoff, Diesel und/oder Benzin, welche umfasst:

a) eine Einrichtung zur getrennten Gewinnung von Kohlendioxid und Wasser aus der Umgebungsluft,

b) eine Synthesegasherstellungseinrichtung zur Herstellung von Kohlenmonoxid, Wasserstoff, Kohlendioxid und Wasser umfassenden Rohsynthesegases, wobei die Synthesegasherstellungseinrichtung eine von der Einrichtung zur getrennten Gewinnung von Kohlendioxid und Wasser aus der Umgebungsluft führende Zufuhrleitung für Kohlendioxid, eine Zufuhrleitung für Luft und eine Zufuhrleitung für Wasser bzw. Wasserdampf aufweist,

c) eine Trenneinrichtung zur Abtrennung von Kohlendioxid und Wasser aus dem in der Synthesegasherstellungseinrichtung hergestellten Rohsynthesegas,

d) eine Fischer-Tropsch-Einrichtung zur Herstellung von Kohlenwasserstoffen durch ein Fischer-Tropsch-Verfahren aus dem Synthesegas, aus dem in der Trenneinrichtung Kohlendioxid und Wasser abgetrennt wurden,

e) eine Raffinationseinrichtung zur Raffination der in der Fischer-Tropsch-Einrichtung hergestellten Kohlenwasserstoffe zu den synthetischen Kraftstoffen,

f) eine Entsalzungseinrichtung zur Entsalzung von Wasser, wobei die Entsalzungseinrichtung eine Wasserzufuhrleitung von der Einrichtung zur getrennten Gewinnung von Kohlendioxid und Wasser aus der Umgebungsluft sowie eine Wasserabfuhrleitung zu der Fischer-Tropsch-Einrichtung aufweist, und

g) eine Wasserreinigungseinrichtung, welche eine von der Fischer-Tropsch-Einrichtung führende Wasserzufuhrleitung zur Reinigung von darin anfallendem Wasser umfasst,

wobei die Anlage ferner einen Pre-Reformer zur Umwandlung von in der Fischer-Tropsch-Einrichtung und in der Raffinationseinrichtung angefallenen Kohlenwasserstoffen in Methan, Kohlenstoffoxide, Wasser und Wasserstoff aufweist sowie i) eine von der Wasserreinigungseinrichtung zu dem Pre-Reformer führende Wasserdampfzufuhrleitung, ii) eine von der Raffinationseinrichtung in den Pre-Reformer führende Prozessgaszufuhrleitung und/oder eine von der Fischer-Tropsch-Einrichtung in den Pre-Reformer führende Rückgasleitung und iii) eine von dem Pre-Reformer in die mit der Synthesegasherstellungseinrichtung verbundene Zufuhrleitung für Wasser bzw. Wasserdampf führende Kreislaufleitung aufweist.

Indem in der erfindungsgemäßen Anlage und bei dem erfindungsgemäßen Verfahren das für die Treibstoffsynthese, insbesondere für die Synthesegasherstellung und für die Fischer-Tropsch-Synthese, benötigte Wasser teilweise und das hierzu benötigte Kohlendioxid vollständig aus der Umgebungsluft gewonnen werden und das während der Treibstoffsynthese, wie insbesondere der Fischer-Tropsch-Synthese anfallende (Reaktions)wasser in der Wasserreinigungseinrichtung und bevorzugt auch das bei der Synthesegasherstellung anfallende (Reaktions)wasser in der Entsalzungseinrichtung in einem zur Kreislaufführung erforderlichen Ausmaß gereinigt, in dem Pre-Reformer aufbereitet und von dort in die Synthesegasherstellungseinrichtung zurückgeführt werden, können die erfindungsgemäße Anlage und das erfindungsgemäße Verfahren allein durch aus der Umgebungsluft hergestelltes Wasser und aus bei dem Betrieb der Anlage in der Fischer-Tropsch-Synthese und ggf. anderen Anlagenteilen, wie der Synthesegasherstellungseinrichtung, hergestelltes (Reaktions)wasser betrieben werden, also ohne oder mit einer allenfalls geringen Menge an Zufuhr von Frischwasser und insbesondere auch kohlendioxidneutral. Dabei ist die Nutzung des bei der in der Fischer-Tropsch-Einrichtung durchgeführten Fischer-Tropsch-Synthese anfallenden (Reaktions)wassers, insbesondere in der Synthesegasherstellungseinrichtung, wichtig, um ohne oder mit einer allenfalls geringen Menge an Frischwasserzufuhr arbeiten zu können, da allein das aus der Luft in der Einrichtung zur getrennten Gewinnung von Kohlendioxid und Wasser aus der Umgebungsluft gewonnene Wasser hierzu regelmäßig nicht ausreichen wird. Dabei wird die Nutzung des bei der Fischer-Tropsch-Synthese erzeugten (Reaktions)wassers in der Synthesegasherstellungseinrichtung erst dadurch ermöglicht, dass dieses (Reaktions)wasser, welches sich durch extrem hohe CSB -Gehalte, auf Grund der Verunreinigung mit etwa 2 Mass.-% Kohlenwasserstoffen, wie insbesondere $C_{1-6}$-Alkoholen, Aldehyden und Aceton auszeichnet, in der Wasserreinigungseinrichtung gereinigt wird, um zumindest die den hohen CSB-Gehalt verursachenden Verunreinigungen abzutrennen, und danach in dem Pre-Reformer behandelt wird, bevor es über die Zufuhrleitung für Wasser in die Synthesegasherstellungseinrichtung zurückgeführt wird. Wie nachfolgend dargelegt, erfolgt die Reinigung des Wassers in der Wasserreinigungseinrichtung vorzugsweise so, dass zumindest ein Großteil der etwa 2 Mass.-% Kohlenwasserstoffverunreinigungen in dem gereinigten Wasser, von den die den hohen CSB-Gehalt verursachenden Verunreinigungen abgetrennt worden sind verbleibt. Diese Kohlenwasserstoffe werden dann in dem Pre-Reformer zu Methan, Kohlenstoffoxiden, Wasser und Wasserstoff umgewandelt, welche in der Synthesegasherstellungseinrichtung wiederverwertet werden können. Somit können neben dem bei der Fischer-Tropsch-Synthese erzeugten (Reaktions)wasser auch Kohlenwasserstoffabfälle der Fischer-Tropsch-Synthese in der Synthesegasherstellungseinrichtung wiederverwertet werden. Ein weiterer Vorteil der erfindungsgemäßen Anlage ist es, dass durch die von der Raffinationseinrichtung in den Pre-Reformer führende Prozessgaszufuhrleitung bzw. der von der Fischer-Tropsch-Einrichtung in den Pre-Reformer führende Rückgasleitung Prozessgase aus der Raffinationseinrichtung, welche insbesondere $C_{1-5}$-Kohlenwasserstoffe enthalten, bzw. Prozessgase aus der Fischer-Tropsch-Einrichtung, welche insbesondere $C_{1-7}$-Kohlenwasserstoffe, Kohlenmonoxid und Kohlendioxid enthalten, in dem Pre-Reformer zu Methan, Kohlenstoffoxiden, Wasser und Wasserstoff umgewandelt werden, welche in der Synthesegasherstellungseinrichtung, in welche diese über die Kreislaufleitung zurückgeführt werden, wiederverwertet werden. Somit werden Kohlenwasserstoffnebenprodukte in der erfindungsgemäßen Anlage bzw. dem erfindungsgemäßen Verfahren wiederverwertet, anstatt als Abfallprodukt ausgeschleust und entsorgt zu werden, was nicht nur die Menge an produzierten Abfallprodukten reduziert, sondern insbesondere auch die Ausbeute maximiert und damit die Effizienz der Synthesegasherstellungsanlage um mindestens 13% erhöht. Mithin wirken hier die Einrichtung zur getrennten Gewinnung von Kohlendioxid und Wasser aus der Umgebungsluft, die Entsalzungseinrichtung, die Wasserreinigungseinrichtung, der Pre-Reformer und die Synthesegasherstellungseinrichtung synergistisch zusammen, um nicht nur in der Fischer Tropsch-Synthese anfallendes (Reaktions)wasser zu nutzen, sondern um auch in der Fischer Tropsch-Synthese und ggf. in der Raffinationseinrichtung anfallende Kohlenwasserstoffe wiederzuverwerten und so die Ausbeute an synthetischen Kraftstoffen zu maximieren, die Menge an Kohlenwasserstoffabfällen zu minimieren und den Frischwasserbedarf der Anlage auf null oder zumindest auf sehr geringe Werte abzusenken. Abgesehen davon kann hierdurch die Menge an während deren Betrieb aus der Anlage abgeführten Abwassers beträchtlich verringert werden. Zudem erlauben es die erfindungsgemäße Anlage und das erfindungsgemäße Verfahren, die Menge an ungenutzten Abgasen signifikant zu verringern, da die anfallenden Prozessgase in den einzelnen Anlagenteilen wiederverwendet werden. Schließlich können die erfindungsgemäße Anlage und das erfindungsgemäße Verfahren ausschließlich mit elektrischer Energie und so ressourcenschonend betrieben werden, da natürliche und fossile Rohstoffe, wie Erdöl, Erdgas und dergleichen, nicht benötigt werden.

Bei einer Einrichtung zur getrennten Gewinnung von Kohlendioxid und Wasser aus der Umgebungsluft handelt es sich gemäß der vorliegenden Erfindung um eine Einrichtung, welche Kohlendioxid und Wasser aus der Umgebungsluft gewinnen und dann getrennt voneinander zur Verfügung stellen kann. Eine Einrichtung zur getrennten Gewinnung von Kohlendioxid und Wasser aus der Umgebungsluft kann mithin das Kohlendioxid und das Wasser gleichzeitig aus der Luft gewinnen, wobei jedoch danach das Wasser von dem Kohlendioxid getrennt wird, so dass die Einrichtung zur getrennten Gewinnung von Kohlendioxid und Wasser einen Wasserstrom und einen davon getrennten Kohlendioxidstrom zur Verfügung stellt.

Erfindungsgemäß ist die Trenneinrichtung zur Abtrennung von Kohlendioxid und Wasser aus dem in der Synthesegasherstellungseinrichtung hergestellten Rohsynthesegas ausgestaltet, ist die Fischer-Tropsch-Einrichtung zur Herstellung von Kohlenwasserstoffen durch ein Fischer-Tropsch-Verfahren aus dem Synthesegas, aus dem in der Trenneinrichtung Kohlendioxid und Wasser abgetrennt wurden, ausgestaltet, und ist die Raffinationseinrichtung zur Raffination der in der Fischer-Tropsch-Einrichtung hergestellten Kohlenwasserstoffe zu den synthetischen Kraftstoffen ausgestaltet. Das heißt, die Trenneinrichtung zur Abtrennung von Kohlendioxid und Wasser ist mit der Synthesegasherstellungseinrichtung über eine Zufuhrleitung für Rohsynthesegas verbunden, die Fischer-Tropsch-Einrichtung zur Herstellung von Kohlenwasserstoffen durch ein Fischer-Tropsch-Verfahren ist mit der Trenneinrichtung über eine Zufuhrleitung für Synthesegas verbunden und die Raffinationseinrichtung ist mit der Fischer-Tropsch-Einrichtung über eine Zufuhrleitung für Kohlenwasserstoffe verbunden.

Wie vorstehend dargelegt, kann die erfindungsgemäße Anlage ohne oder mit einer allenfalls geringen Menge an Frischwasser betrieben werden und weist daher bevorzugt keine Frischwasserzufuhrleitung auf. Frischwasserzufuhrleitung bezeichnet dabei jede Leitung, welche Wasser von außen in die Anlage führt, ausgenommen von Leitung(en), welche Umgebungsluft, die zu einem geringen Prozentsatz Wasser enthält, in die Anlage führt.

Erfindungsgemäß umfasst die Anlage einen Pre-Reformer zur Umwandlung von in der Fischer-Tropsch-Einrichtung und in der Raffinationseinrichtung angefallenen Kohlenwasserstoffen in Methan, Kohlenstoffoxide, Wasser und Wasserstoff sowie eine von der Wasserreinigungseinrichtung zu dem Pre-Reformer führende Wasserdampfzufuhrleitung, über von der Wasserreinigungseinrichtung Wasserdampf zugeführt wird, welcher höhere Kohlenwasserstoffe aus der Fischer-Tropsch-Synthese enthält, die in der Fischer-Tropsch-Einrichtung durchgeführt wird. Höhere Kohlenwasserstoffe sind dabei alle mehr als ein Kohlenstoffatom pro Molekül aufweisende Kohlenwasserstoffverbindungen und insbesondere $C_{2-7}$-Kohlenwasserstoffe. Der Pre-Reformer erlaubt den Abbau der in der Fischer-Tropsch-Einrichtung und in der Raffinationseinrichtung angefallenen Kohlenwasserstoffe zu Methan, Kohlenstoffoxide, Wasser und Wasserstoff und somit deren Wiederverwertung in der erfindungsgemäßen Anlage, beispielsweise durch Zuführung zu der Synthesegasherstellungseinrichtung. Aufgrund der Konvertierung aller anfallenden kohlenwasserstoffhaltigen Abgasströme in dem Pre-Reformer fallen in der erfindungsgemäßen Anlage so gut wie keine Emissionen von Kohlenwasserstoffen an und die Effizienz der Anlage wird durch die Wiederverwendung der gasförmigen Kohlenwasserstoffströme wesentlich erhöht. Mithin erhöht dieser die Kohlenstoffausbeute in dem in der erfindungsgemäßen Anlage durchgeführten Verfahren und somit auch die Gesamtausbeute des Verfahrens. Zudem schützt der Pre-Reformer durch Absenkung der Schadstoffbeladung unterhalb des 1 ppb-Bereiches die nachgeschaltete Synthesegasherstellungseinrichtung vor schädlichen Schwefelverbindungen, was insbesondere dann besonders vorteilhaft ist, wenn die Synthesegasherstellungseinrichtung ein oder mehrere Co-Solid-OxidElektrolysezellen umfasst. Schließlich schützt der Pre-Reformer die nachgeschaltete Synthesegasherstellungseinrichtung auch vor Verkokung, indem in dem Pre-Reformer die höheren Kohlenwasserstoffe aus dem Strom entfernt werden.

Im Detail, laufen in dem Pre-Reformer, der auch als autothermer Reformer oder adiabater Reformer bezeichnet werden kann, drei Teilreaktionen ab, nämlich eine endotherme Reaktion gefolgt von einer exotherme Methanisierung und einer exotherme Shift-Reaktion in einem thermodynamischen Gleichgewicht zwischen den Kohlenstoffoxiden (CO, $CO_2$), Methan, Wasserstoff und Wasser entsprechend den nachfolgenden Teilreaktionen:

$$C_nH_m + nH_2O \rightarrow nCO + \left(n + \frac{m}{2}\right)H_2 \qquad \Delta H > 0 \qquad\qquad (1)$$

$$CO + 3H_2 \rightarrow CH_4 + H_2O \qquad\qquad \Delta H = -206\frac{kJ}{mole} \qquad (2)$$

$$CO + H_2O \rightarrow CO_2 + H_2 \qquad\qquad \Delta H = -41\frac{kJ}{mole} \qquad (3)$$

Vorzugsweise enthält der Pre-Reformer als Katalysator Nickeloxid. Gute Ergebnisse werden insbesondere erzielt, wenn der Katalysator auf einem Träger aufgebrachtes Nickeloxid enthält, wobei als Träger beispielsweise Aluminiumoxid, bevorzugt $Al_2O_3$, eingesetzt wird. Besonders bevorzugt enthält der Katalysator zusätzlich auch Chromoxid ($Cr_2O_3$). Ganz besonders bevorzugt ist ein Katalysator, der 20 bis 30 Mass.-% Nickel auf einem Aluminiumoxidträger enthält, wobei der Katalysator optional auch Chromoxid enthalten kann. Die thermische Stabilität solcher Katalysatoren ist bis mindestens 650°C gewährleistet. Zudem weisen diese Katalysatoren eine sehr hohe Beständigkeit gegenüber Verkokung auf.

Bevorzugt ist der Pre-Reformer als Festbettreaktor ausgeführt, und zwar bevorzugt so, dass dieser bei dessen Betrieb von oben nach unten durchströmt wird.

Ferner ist es bevorzugt, dass der Pre-Reformer so ausgeführt ist, dass er bei einem Druck von 5 bis 30 bar und/oder bei einer Temperatur zwischen 380 und 650°C betrieben werden kann.

Erfindungsgemäß umfasst mithin die Anlage eine von der Raffinationseinrichtung in den Pre-Reformer führende Prozessgaszufuhrleitung und/oder eine von der Fischer-Tropsch-Einrichtung in den Pre-Reformer führende Rückgasleitung. Zudem umfasst die Anlage eine von dem Pre-Reformer in die mit der Synthesegasherstellungseinrichtung verbundene Zufuhrleitung für Wasser führende Kreislaufleitung, um so die in der Raffinationseinrichtung und der Fischer-Tropsch-Einrichtung anfallenden und in dem Pre-Reformer aufgearbeiteten Prozessgase zumindest weitgehend wiederzuverwerten. Ferner führt vorzugsweise auch eine Wasserdampfrückfuhrleitung von der Fischer-Tropsch-Einrichtung in die Synthesegasherstellungseinrichtung.

Ungeachtet dessen, ist es bevorzugt, einen Teil des während des Betriebes der Fischer-Tropsch-Einrichtung anfallenden Prozessgases, welches zur Unterscheidbarkeit von den anderen Prozessgasen nachfolgend Fackelgas genannt wird, aus der Anlage als Fackelgas abzuführen, um eine Anreicherung der Prozessgase mit Inertgasen zu vermeiden. Aus diesem Grund ist es bevorzugt, dass die Fischer-Tropsch-Einrichtung ferner eine Fackelgasabfuhrleitung aufweist.

Gemäß einer weiteren bevorzugten Ausführungsform der vorliegenden Erfindung handelt es sich bei der Einrichtung zur getrennten Gewinnung von Kohlendioxid und Wasser aus der Umgebungsluft um eine Direct-Air-Capture-Einrichtung, welche mehrere Adsorptions-/Desorptionsmodule derart parallelgeschaltet aufweist, dass ein Adsorptions-/Desorptionsmodul nach Erreichen seiner Gleichgewichtsbeladung von dem Adsorptionsmodus in den Desorptionsmodus umgeschaltet wird. Während des Betriebes der Direct-Air-Capture-Einrichtung werden aus der Umgebungsluft mittels Adsorption an einem Adsorptionsmittel, vorzugsweise aminfunktionalisierte poröse Feststoffe, in einem diskontinuierlichen Prozess Kohlendioxid und Wasser aus der Luft abgetrennt. Das so adsorbierte Kohlendioxid und Wasser bzw. Wasserdampf werden dann durch Desorption von dem Adsorptionsmittel getrennt, sobald das Adsorptionsmittel mit dem Kohlendioxid und Wasser beladen ist. Um den Prozess zumindest quasikontinuierlich zu gestalten, werden vorzugsweise mehrere Adsorptions-/Desorptionsmodule wie vorstehend dargelegt parallel geschalten. Während die Adsorption bei niedriger Temperatur, vorzugsweise bei Umgebungstemperaturen (-20 bis 40°C) und Normaldruck durchgeführt wird, wird die Desorption unter Vakuum von beispielsweise 0,1 bis 0,3 bar abs und bei erhöhter Temperatur von vorzugsweise 120 bis 150°C durchgeführt. Sobald das Adsorptionsmittel mit dem Kohlendioxid und Wasser beladen ist, wird zur Einleitung der Desorption die Luftzu- und abfuhr zu der Einrichtung abgesperrt und die Desorptionsphase wird eingeleitet indem ein Heizmedium durch das Adsorptionsmittel gepumpt wird, um das Adsorptionsmittel aufzuheizen. Gleichzeitig wird eine Wasserringpumpe zur Absaugung des Gemisches aus Kohlendioxid und Wasserdampf zugeschaltet, welche zusätzlich zu den hohen Desorptionstemperaturen von 150 bis 200°C ein Vakuum erzeugt, um eine optimale Desorption zu ermöglichen. Der Gasstrom aus dem Adsorptions-/Desorptionsmodul wird vor der Wasserringpumpe mit Kühlwasser gekühlt und außerdem erfolgt eine Wasserkühlung des Flüssigkeitsringes der Wasserringpumpe. Die Wasserringpumpe erzeugt einen so geringen Druck, dass das Gemisch aus hochreinem Kohlendioxid und Wasser in einem nachfolgenden Abscheider getrennt werden kann. Obwohl die Verunreinigungen in der Luft prinzipiell als relativ gering betrachtet werden können, reichern sich auf Grund des diskontinuierlichen Verfahrens der Adsorption zahlreiche Verunreinigungen in dem aus der Umgebungsluft abgetrennten Wasser, wie insbesondere zahlreiche An- und Kationen (wie Ammoniak, Kalzium, Magnesium, Eisen, Kupfer, Mangan und wie Chloride, Sulfate, Nitride, Nitrate, Sulfate etc.) an, die vor der nachfolgenden Synthesegasherstellung abgetrennt werden müssen. Für die Synthesegasherstellung mit der erfindungsgemäß bevorzugten Co-Solid-Oxid-Elektrolysezelle wird eine elektrische Leitfähigkeit von maximal 2 $\mu$S/cm und bevorzugt weniger als 2 $\mu$S/cm benötigt. Daher werden das in der Einrichtung zur getrennten Gewinnung von Kohlendioxid und Wasser aus der Umgebungsluft gewonnene Kohlendioxid und Wasser nicht zusammen der Synthesegasherstellungseinrichtung zugeführt, sondern zunächst das Wasser durch Kondensation von dem Kohlendioxid abgetrennt, wobei das abgetrennte Wasser der Entsalzungseinrichtung zugeführt wird und das von Wasser befreite Kohlendioxid der Synthesegasherstellungseinrichtung zugeführt wird. Sobald die Desorption beendet ist, wird das Adsorptions-/Desorptionsmodul zunächst auf eine Temperatur um die 25°C heruntergekühlt, bevor die Adsorption von Kohlendioxid und Wasser aus der Luft erneut beginnt. Dazu werden die Luftzu- und abfuhren zu der Einrichtung wieder geöffnet.

Das für die Synthesegasherstellung erforderliche Wasser mit der erforderlichen Reinheit wird der Synthesegasherstellungseinrichtung über die vorstehend genannte Zufuhrleitung für Wasser bevorzugt in Form von Wasserdampf zugeführt, wobei der Wasserdampf bevorzugt zusätzlich Methan, Kohlenstoffoxiden und Wasserstoff enthält, welche aus dem Pre-Reformer stammen, und zusätzlich auch mit Wasserdampf gespeist werden kann, der aus der Fischer-Tropsch-Einrichtung stammt. Wasserdampf bezeichnet hierbei verdampftes Wasser, also Wasser in gasförmigem Zustand. Auch wenn das Wasser der Synthesegasherstellung bevorzugt in Form von Wasserdampf zugeführt wird, wird vorstehend und nachfolgend in diesem Zusammenhang teilweise allgemein von Wasser ohne Angabe des Aggregatzustandes gesprochen. Dennoch gilt auch für alle vorstehenden und nachfolgenden Ausführungsformen, dass das Wasser der Synthesegasherstellungseinrichtung bevorzugt in Form von Wasserdampf zugeführt wird.

Gute Ergebnisse werden bei der Synthesegasherstellung insbesondere erzielt, wenn die Synthesegasherstellungseinrichtung ein oder mehrere Co-Solid-Oxid-Elektrolysezellen umfasst. Das der Synthesegasherstellungseinrichtung separat zugeführte Wasserdampf und Kohlendioxid werden in der vorzugsweise bei 800 bis 1.000°C, drucklos und mit einer Gleichspannung von vorzugsweise 1.29 V, maximal 1.6 V pro Ebene und 0,6 A/cm$^2$ betriebenen Co-Solid-Oxid-Elektrolysezelle zu einem Gasgemisch enthaltend Kohlenmonoxid, Wasserstoff, Wasserdampf und Kohlendioxid umgesetzt. Das so hergestellte Rohsynthesegas enthält beispielsweise 50 bis 60 Mass.-% Kohlenmonoxid, 5 bis 10 Mass.-% Wasserstoff, 10 bis 12 Mass.-% Wasserdampf und 20 bis 30 Mass.-% Kohlendioxid. Auf der Sekundärseite der Keramikmembranen wird zur Abführung des sich bildenden Sauerstoffstromes heiße Luft eingeblasen. Die Abluft setzt sich dann aus Luft und einen wesentlichen Sauerstoffanteil zusammen. In der Co-Solid-Oxid-Elektrolysezelle werden die Wasserdampfelektrolyse (Reaktion (1): $2*H_2O = 2*H_2 + O_2$) mit der Reverse-Wassergas-Shift Reaktion (RWGS = Reverse Water Gas Shift) (Reaktion (2): $CO_2 + H_2 = H_2O + CO$) verbunden. Dabei wird 1 Mol des $H_2$ aus der Reaktion (1) in der Reaktion (2) verbraucht und 1 Mol des entstandenen Wassers der Reaktion (2) in der Reaktion (1) verbraucht, so dass sich die summarische Reaktionsgleichung $CO_2 + 2*H_2O = 2*H_2 + CO + 1,5*O_2$ ergibt, die im rein stöchiometrischen Fall ein $H_2/CO$-Verhältnis von 2 produziert. Der Sauerstoff wird wieder über die Membran in die Luftkammer der Co-Solid-Oxid-Elektrolysezelle transportiert. Das $H_2/CO$-Verhältnis kann über die Edukte von 1,5 bis 5 eingestellt werden, wobei im Hinblick auf nachfolgende Fischer-Tropsch-Synthese das $H_2/CO$-Verhältnis bevorzugt auf etwas mehr als 2,0 eingestellt wird. Insgesamt werden in der Synthesegasherstellungseinrichtung ein Kohlenmonoxid, Wasserstoff, Wasserdampf und Kohlendioxid enthaltenen Gasgemisch erzeugt. Das nach der Abkühlung des Gasgemisches auskondensierte Wasser weist eine vergleichsweise hohe Anreicherung von Ionen auf, weswegen dieses vorzugsweise durch die Wasserzufuhrleitung von der Synthesegasherstellungseinrichtung in die Entsalzungseinrichtung geführt wird. Das Rohsynthesegas kann in einem Bereich eines Molverhältnisses von $H_2/CO$ von 1,5 bis 5 erzeugt werden, wobei für die Fischer-Tropsch-Synthese ein $H_2/CO$ Verhältnis von größer 2,0 angestrebt wird. Da Co-Solid-Oxid-Elektrolysezellen gegenüber $C_{2+}$-Kohlenwasserstoffen sehr sensitiv sind, da die Co-Solid-Oxid-Elektrolysezellen bei deren Betrieb in Gegenwart der $C_{2+}$-Kohlenwasserstoffe verkoken, werden erfindungsgemäß die in die Synthesegasherstellungseinrichtung zurückgeführten Prozess- und Rückfuhrgase sowie kohlenwasserstoffhaltigen Prozesswässer aus der Fischer-Tropsch-Einrichtung und der Raffinationseinrichtung in einem Pre-Reformer behandelt, in dem in der Fischer-Tropsch-Einrichtung und in der Raffinationseinrichtung angefallene Kohlenwasserstoffe in Methan, Kohlenstoffoxide, Wasser und Wasserstoff umgewandelt werden. Methan wird dann in der Synthesegasherstellungseinrichtung mit dem Sauerstoff zu Kohlenstoffoxiden und Wasserdampf umgewandelt, welche dann wiederum zu Synthesegas verarbeitet werden. Somit leistet das über den Pre-Reformer in die Synthesegasherstellungseinrichtung eingebrachte Methan einen wesentlichen Beitrag zur Verringerung der Prozess-Endothermie zur Aufrechterhaltung der Reaktionstemperatur von etwa 1.000°C.

Das in den ein oder mehreren Co-Solid-Oxid-Elektrolysezellen erzeugte Rohsynthesegas enthält noch wesentliche Anteile von Kohlendioxid und geringere Mengen von Wasserdampf, die zur Optimierung der Fischer-Tropsch-Synthese in der nachgeschalteten Trenneinrichtung abgetrennt werden. Vorzugsweise umfasst die Trenneinrichtung einen Aminwäscher zur Abtrennung von Kohlendioxid durch Absorption aus dem Rohsynthesegas, einen Verdichter zur Kondensation von Wasser und zur Verdichtung des Synthesegases auf den in der Fischer-Tropsch-Synthese erforderlichen Druck, eine zu der Synthesegasherstellungseinrichtung oder in die von der Einrichtung zur getrennten Gewinnung von Kohlendioxid und Wasser in die Synthesegasherstellungseinrichtung führende Leitung für Kohlendioxid führende Kohlendioxidrückführleitung sowie eine zu der Fischer-Tropsch-Einrichtung führende Synthesegaszufuhrleitung. In dem Aminwäscher wird Kohlendioxid aus dem Rohsynthesegas durch Absorption mit wenigstens einem Absorptionsmittel, welches bevorzugt aus einer Aminverbindung, wie Monoethanolamin und/oder Diglycolamin und Wasser besteht, abgetrennt und über die Kohlendioxidrückführleitung zu der Synthesegasherstellungseinrichtung zurückgeführt. In dem nachgeschalteten Verdichter wird das verbliebene Synthesegas auf den in der Fischer-Tropsch-Synthese erforderlichen Druck verdichtet, wobei gleichzeitig Wasser kondensiert und aus dem Synthesegas abgetrennt wird. Während das abgetrennte Wasser über die Wasserzufuhrleitung von der Trenneinrichtung in die Entsalzungseinrichtung geleitet wird, wird das verbleibende (gereinigte) Synthesegas der Fischer-Tropsch-Einrichtung zugeführt. Das der Fischer-Tropsch-Einrichtung zugeführte Synthesegas enthält vorzugsweise 80 bis 90 Mass.-% Kohlenmonoxid und 10 bis 15 Mass.-% Wasserstoff. Die Abtrennung von Kohlendioxid aus dem Rohsynthesegas ist deshalb vorteilhaft, weil ansonsten Kohlendioxid im Kreislauf geführt und angereichert werden würde, da bei der Fischer-Tropsch-Synthese selbst Kohlendioxid produziert und nicht umgesetzt wird. Mithin wird durch die Abtrennung von Kohlendioxid aus dem Rohsynthesegas dessen Konzentration nicht erhöht und dadurch werden die nachfolgenden Anlagenteile vor einer zu hohen Kohlendioxidbelastung geschützt.

In der Entsalzungseinrichtung wird der Abwasserstrom zumindest aus der Einrichtung zur getrennten Gewinnung von Kohlendioxid und Wasser und vorzugsweise wird auch der Abwasserstrom aus der Synthesegasherstellungseinrichtung und/oder der Abwasserstrom aus der Trenneinrichtung und/oder der Abwasserstrom aus dem Verdichter zur Kondensation von Wasser und zur Verdichtung des Synthesegases und besonders bevorzugt sowohl der Abwasserstrom aus der Synthesegasherstellungseinrichtung als auch der Abwasserstrom aus der Trenneinrichtung als auch der Abwasserstrom aus dem Verdichter zur Kondensation von Wasser und zur Verdichtung des Synthesegases derart aufbereitet, dass diese in anderen Anlagenteilen, wie insbesondere in der Synthesegasherstellungseinrichtung, in der Fischer-Tropsch-Synthese und, falls vorhanden, in der Wasserstoffproduktion unmittelbar eingesetzt werden können.

Beispielsweise enthält der Abwasserstrom aus der Einrichtung zur getrennten Gewinnung von Kohlendioxid und Wasser beträchtliche Mengen an Ammoniumionen sowie signifikante Mengen an Calcium-, Magnesium-, Chlorid- und Sulfationen. Zudem enthält es andere Ionen, wie Nitrat-, Nitrid-, Sulfid-, Eisen und Mangan. Zudem enthalten die Abwasserströme aus der Synthesegasherstellungseinrichtung, aus der Trenneinrichtung und aus dem Verdichter zur Kondensation von Wasser und zur Verdichtung des Synthesegases Silizium-, Natrium-, Calcium, Bor-, Magnesium-, Eisen-, Lithium-, Nickel- und Bleiionen. Zu diesem Zweck wird es in Weiterbildung des Erfindungsgedankens vorgeschlagen, dass die Entsalzungseinrichtung so ausgestaltet ist, dass Wasser soweit entsalzt und entgast werden kann, dass dessen Leitfähigkeit bei kleiner 20 μS/cm, bevorzugt kleiner 10 μS/cm, besonders bevorzugt kleiner 5 μS/cm und höchst bevorzugt maximal 2 μS/cm liegt. Entsalztes Wasser mit einer Leitfähigkeit von maximal 2 μS/cm wird in der vorliegenden Erfindung auch als vollentsalztes Wasser bezeichnet und die hierfür ausgelegte Entsalzungseinrichtung als Vollentsalzungseinrichtung. Zu diesem Zweck weist die Entsalzungseinrichtung und bevorzugt Vollentsalzungseinrichtung vorzugsweise ein oder mehrere Anionen- und Kationenaustauscher sowie eine Membraneinrichtung zur Entgasung auf. Während der Entgasung werden Kohlendioxid, Kohlenmonoxid, Stickstoff und Sauerstoff zuverlässig aus dem Wasser abgetrennt. Die Entladung der An- und Kationentäuscher erfolgt vorzugsweise mit Hilfe von Natronlauge bzw. Salzsäure. Das entstehende Abwasser hat in etwa die 6 -fache Ionenkonzentration als das Wasser vor der Zuführung in die Entsalzungseinrichtung und kann auf Grund einer gleichzeitigen Entladung des An- und Kationentauschers als neutrales Abwasser zu einer städtischen Abwasseranlage geführt werden.

Das Synthesegas wird anschließend in der Fischer-Tropsch-Einrichtung zu Kohlenwasserstoffen reagiert. Die Fischer-Tropsch-Synthese wird vorzugsweise in einem Reaktor mit einem Katalysator bei einer Temperatur von 170 bis 270°C, bevorzugt von 190 bis 250°C und höchst bevorzugt 210 bis 230°C, wie etwa 220°C, durchgeführt. Als Katalysatoren eignen sich insbesondere solche ausgewählt aus der Gruppe bestehend aus Kobaltkatalysatoren, wie bevorzugt Co/MMT (Montmorillonite) oder $Co/SiO_2$. Die Fischer-Tropsch-Synthese wird vorzugsweise in einen oder mehreren Rohrbündelapparaten durchgeführt, wobei sich der Katalysator in den Rohren befindet, wohingegen das Kühlmedium, vorzugsweise Kesselspeisewasser, im Mantelraum geführt wird. Die Fischer-Tropsch-Einrichtung umfasst bevorzugt einen oder zwei Reaktoren, um die Fischer-Tropsch-Synthese einstufig oder zweistufig durchführen zu können. Aus Kostengründen wird die Fischer-Tropsch-Synthese bevorzugt einstufig durchgeführt. Beispielsweise wird die Fischer-Tropsch-Synthese bei einem Druck von 25 bis 35 bar oder vorzugsweise auch bei einem höheren Druck von beispielsweise 45 bar durchgeführt. Je höher der Druck, desto kleiner können die Reaktoren gebaut werden. Vorzugsweise wird die Fischer-Tropsch-Synthese so durchgeführt, dass ein Kohlenmonoxidumsatz von 92% oder mehr erreicht wird. Bei der Fischer-Tropsch-Synthese werden als flüssige Produkte Kondensate und Wachse erhalten, die der nachgeschalteten Raffinationseinrichtung zugeführt werden. Die Kühlung des sehr stark exothermen Prozesses der Fischer-Tropsch-Synthese erfolgt über Kesselspeisewasser, das über eine entsprechende Leitung von der Entsalzungseinrichtung in die Fischer-Tropsch-Einrichtung geführt und zur Kühlung der Reaktoren verdampft wird. Der anfallende Wasserdampf der Fischer-Tropsch-Synthese wird über die vorstehend beschriebene bevorzugte Wasserdampfrückfuhrleitung bevorzugt zumindest zu einem großen Teil der Synthesegasherstellungseinrichtung zugeführt. Die darüberhinausgehende Menge an Wasserdampf aus der Fischer-Tropsch-Einrichtung wird vorzugsweise für die Beheizung in den anderen Anlageneinheiten verwendet, so dass kein externer Wasserdampf erforderlich wird.

In der Raffinationseinrichtung werden die Produkte der Fischer-Tropsch-Synthese zu synthetischen Kraftstoffen, insbesondere Flugzeugturbinenkraftstoff (Kerosin), Diesel und/oder Benzin veredelt. Für die Herstellung von industriell nutzbaren Kerosin, Diesel und Benzin ist es erforderlich, das paraffinische Produkt der Fischer-Tropsch-Synthese durch Hydro-Isomerisierung und Cracken (Iso-Cracking) derart umzuwandeln, dass ein hochwertiger Flugturbinenkraftstoff mit den erforderlichen Kalteigenschaften (vorzugsweise mit einem Temperaturgrenzwert der Filtrierbarkeit entsprechend "Cold Filter Plugging Point "von maximal -40°C) produziert wird. Die schweren Produkte werden im Iso-Cracker-Reaktor derart rezirkuliert, dass nur noch Kerosin und Benzin als Produkte entstehen. Die dabei entstehenden leichten Gase werden als Prozessgase über die vorstehend als bevorzugt beschriebene Prozessgaszufuhrleitung von der Raffinationseinrichtung in den Pre-Reformer geleitet.

Hierzu umfasst die Raffinationseinrichtung vorzugsweise einen oder mehrere Iso-Cracker-Reaktoren. Vorzugsweise enthalten die ein oder mehreren Iso-Cracker-Reaktoren einen Katalysator, der keine Sulfidierung erfordert und so eine Verunreinigung der Reaktionsprodukte mit schwefelhaltigen Komponenten vermeidet, was es wiederum erlaubt, dass das während dem Iso-Cracken erzeugte Prozessgas als auch der erzeugte Wasserdampf in die Synthesegasherstellungseinrichtung, welche bevorzugt ein oder mehrere Co-Solid-Oxid-Elektrolysezellen umfasst, zurückgeführt werden kann. Co-Solid-Oxid-Elektrolysezellen tolerieren ohne Schaden zu nehmen nur sehr geringe Schwefelkonzentrationen im Bereich von 1 pbp oder weniger. Gute Ergebnisse werden insbesondere erhalten, wenn der Katalysator der ein oder mehreren Iso-Cracker-Reaktoren ein Element ausgewählt aus der Gruppe bestehend aus Ruthenium, Rhodium, Palladium, Silber, Rhenium, Osmium, Iridium, Platin, Gold, Kupfer, Rhenium, Quecksilber und beliebigen Kombinationen von zwei oder mehr der vorgenannten Elemente enthält. Besonders bevorzugt enthalten die ein oder mehreren Iso-Cracker-Reaktoren als Katalysator einen Platin-/Palladiumkatalysator. Das Iso-Cracken ist eine katalytische Reaktion, in der insbesondere langkettige paraffinische Kohlenwasserstoffe zu kürzerkettigen Isomeren mit verbesserten Kalteigenschaften für die Herstellung von Kerosin herstellt werden. Die katalytische Reaktion erfolgt bevorzugt in Bettrektoren, die zur Gewährleistung der maximalen Betttemperatur mit Wasserstoff gekühlt werden. Beispielsweise werden diese bei einem Druck von mindestens 70 bar betrieben.

Ferner ist es bevorzugt, dass die Raffinationseinrichtung einen oder mehrere Wasserstoffstripper zum Abtrennen von leichten Kohlenwasserstoffen (nämlich Ci bis $C_4$ Kohlenwasserstoffen) umfasst. Der Vorteil der Verwendung von Wasserstoff als Stripp-Medium im Vergleich zu dem hierfür herkömmlicherweise eingesetzten Wasserdampf liegt darin, dass der Wasserstoff auf Grund der geringeren Molekularmasse gegenüber Wasserdampf zu einen wesentlich besseren Strippeffekt führt und über den Kohlenwasserstoff -Rückgasstrom zu der Synthesegasherstellungseinrichtung dem Gesamtprozess wieder zugeführt werden kann. Damit werden auch die bevorzugten maximalen Schwefelanteile im Abwasser aus dem Iso-Cracker zur Wasserreinigungsanlage zuverlässig eingehalten.

Schließlich umfasst die Raffinationseinrichtung vorzugsweise eine oder mehrere Destillationssäulen zum Auftrennen der synthetischen Kraftstoffe in einzelne Fraktionen, wie Flugzeugturbinentreibstoff und Diesel, Flugzeugturbinentreibstoff und Benzin, Flugzeugturbinentreibstoff, Benzin und Diesel oder dergleichen.

Für den Iso-Cracker-Reaktor und für den Wasserstoffstripper werden Wasserstoff benötigt. Hierfür wird es in Weiterbildung des Erfindungsgedankens vorgeschlagen, dass die Anlage ferner eine Wasserstoffproduktionseinrichtung sowie vorzugsweise auch eine Wasserstoffverdichtungseinrichtung aufweist. Vorzugsweise erfolgt die Wasserstoffproduktion durch eine alkalische Niedertemperatur-Hochdruck-Wasserelektrolyse. Ferner ist es bevorzugt, dass die Anlage eine Wasserstoffverdichtungseinrichtung aufweist, um den in der Wasserstoffproduktionseinrichtung erzeugten Wasserstoff auf den für die Raffination in dem Iso-Cracker-Reaktor und in dem Wasserstoffstripper benötigten Druck von 60 bis 80 bar, wie etwa 70 bar, zu bringen. Vorzugsweise umfasst die Anlage ferner eine von der Entsalzungseinrichtung zu der Wasserstoffproduktionseinrichtung führende Wasserzufuhrleitung, eine zu der Wasserstoffproduktionseinrichtung führende Luftzufuhrleitung, eine von der Wasserstoffproduktionseinrichtung zu der Wasserstoffverdichtungseinrichtung führende Wasserstoffleitung, eine von der Wasserstoffverdichtungseinrichtung zu der Entsalzungseinrichtung führende Wasserleitung, sowie eine von der Wasserstoffverdichtungseinrichtung zu der Raffinationseinrichtung führende Wasserstoffleitung.

Das bei der Fischer-Tropsch-Synthese erzeugte Abwasser mit hohen Kohlenwasserstoffanteilen, wie insbesondere von Alkoholen, Aldehyden, Carbonsäuren etc., mit einem chemischen Sauerstoffbedarf (CSB) von ca. 40.000 mg/l kann nicht direkt einer städtischen biologischen Abwasseranlage zugeführt werden. Zudem enthält es etwa 2 Mass.-% Kohlenwasserstoffe, die erfindungsgemäß bevorzugt für die Treibstoffsynthese genutzt werden sollen. Typischerweise enthält das bei der Fischer-Tropsch-Synthese erzeugte Abwasser signifikante Mengen an Methanol und Ethanol und zusätzlich geringere Mengen an Propanolen, Butanolen, 2-Pentanol, n-Hexan, Acetaldehyd, Propionaldehyd und Aceton. Aus diesem Grund wird das Fischer-Tropsch-Abwasser über eine entsprechende Leitung der Wasserreinigungseinrichtung zugeleitet. Ferner wird ebenfalls vorzugsweise das in der Raffination gebildete Wasser über eine entsprechende Leitung der Wasserreinigungseinrichtung zugeleitet. Die Wasserreinigungseinrichtung weist vorzugsweise eine oder mehrere Teilverdampfungseinheiten auf, in der bzw. in denen vorzugsweise mindestens 70% des Abwassers durch Teilverdampfung und damit wenigstens 75% und bevorzugt wenigstens 95% aller darin enthaltenden Kohlenwasserstoffe abgetrennt werden. Alternativ oder zusätzlich zu ein oder mehreren Teilverdampfungseinheiten können bevorzugt auch alle anderen Arten von Wasserreinigungseinrichtungen eingesetzt werden, die aus dem Abwasser Wasserdampf und wenigstens 75% und bevorzugt wenigstens 95% aller darin enthaltenden Kohlenwasserstoffe abtrennt. Erfindungsgemäß wird zumindest ein Teil und vorzugsweise wird der gesamte abgetrennte Wasserdampf und vorzugsweise auch die abgetrennten Kohlenwasserstoffe über die Wasserzufuhrleitung bzw. Wasserdampfzufuhrleitung in den Pre-Reformer geleitet.

Besonders bevorzugt werden als Wasserreinigungseinrichtung ein oder mehrere Teilverdampfungseinheiten eingesetzt, werden als Synthesegasherstellungseinrichtung eine oder mehrere Co-Solid-Oxid-Elektrolysezellen eingesetzt und enthält die Raffinationseinrichtung ein oder mehreren Iso-Cracker-Reaktoren mit einem Katalysator, der keine Sulfidierung erfordert. Dadurch wird zuverlässig gewährleistet, dass über den Pre-Reformer in die Synthesegasherstellungseinrichtung nur Verbindungen zugeführt werden, welche die Co-Solid-Oxid-Elektrolysezellen auch bei längerer Betriebsdauer nicht negativ beeinträchtigen, wie zerstören und/oder verkoken.

Ein weiterer Gegenstand der vorliegenden Erfindung ist ein Verfahren zur Herstellung von synthetischen Kraftstoffen, insbesondere von Flugturbinenkraftstoff, Benzin und/oder Diesel, welches in einer zuvor beschriebenen Anlage durchgeführt wird.

Wie vorstehend dargelegt, kann das erfindungsgemäße Verfahren ohne Frischwasser oder mit einer allenfalls geringen Menge an Frischwasser betrieben werden. Aus diesem Grund ist es bevorzugt, dass dem erfindungsgemäßen Verfahren weniger als 20%, bevorzugt weniger als 10%, besonders bevorzugt weniger als 5% und höchst bevorzugt gar kein Frischwasser zugeführt wird. Frischwasserzufuhr bezeichnet dabei die Zufuhr von jeglichem Wasser von außen in die Anlage, welches nicht in der Einrichtung zur getrennten Gewinnung von Kohlendioxid und Wasser aus der Umgebungsluft gewonnen worden ist.

Gemäß einer weiteren bevorzugten Ausführungsform der vorliegenden Erfindung ist es vorgesehen, dass in der Trenneinrichtung Kohlendioxid von dem Synthesegas durch Absorption mit wenigstens einer Aminverbindung und vorzugsweise mit Monoethanolamin und/oder Diglycolamin und Wasser abgetrennt wird.

Ferner ist es bevorzugt, dass das Wasser in der Entsalzungseinrichtung zu Wasser mit einer Leitfähigkeit von kleiner 20 $\mu$S/cm, bevorzugt kleiner 10 $\mu$S/cm, besonders bevorzugt kleiner 5 $\mu$S/cm und höchst bevorzugt maximal 2 $\mu$S/cm gereinigt wird.

In Weiterbildung des Erfindungsgedankens wird vorgeschlagen, dass aus der Fischer-Tropsch-Einrichtung Fackelgas abgeleitet wird, wobei der Fackelgasstrom größer ist als der Quotient von aus dem aus der Einrichtung zur getrennten Gewinnung von Kohlendioxid und Wasser aus der Umgebungsluft abgeführten Strom enthaltenem Mengenstrom von Stickstoff und von Argon und der in dem Rückgasstrom von der Fischer-Tropsch-Einrichtung in den Pre-Reformer eingestellten Gesamtkonzentration von Stickstoff und von Argon, wobei die Gesamtkonzentration von Stickstoff und von Argon in dem Rückgasstrom von der Fischer-Tropsch-Einrichtung in den Pre-Reformer vorzugsweise auf 1,5 bis 10 Mass.-% eingestellt wird. Dadurch wird die Anreicherung von Inertgasen, wie Stickstoff und Argon, in der Synthesegasherstellungseinrichtung und in der Fischer-Tropsch-Einrichtung zuverlässig verhindert.

Erfindungsgemäß wird in der Raffinationseinrichtung anfallendes Prozessgas, welches bevorzugt Wasserstoff und $C_{1-5}$-Kohlenwasserstoffe enthält, und/oder in der Fischer-Tropsch-Einrichtung anfallendes Rückgas, welches bevorzugt Wasserstoff, Kohlenmonoxid, Kohlendioxid, Wasser, Stickstoff und $C_{1-7}$-Kohlenwasserstoffe enthält, dem Pre-Reformer zugeführt, in dem diese zu Methan, Kohlenstoffoxide, Wasser und Wasserstoff umgewandelt werden, bevor das so hergestellte Gas in die Synthesegasherstellungseinrichtung geführt wird. Vorzugsweise werden sowohl in der Raffinationseinrichtung anfallendes Prozessgas als auch in der Fischer-Tropsch-Einrichtung anfallendes Rückgas dem Pre-Reformer zugeführt.

Gute Ergebnisse werden insbesondere auch erhalten, wenn die Anlage eine Wasserstoffproduktionseinrichtung sowie eine Wasserstoffverdichtungseinrichtung aufweist und die Raffinationseinrichtung einen oder mehrere Iso-Cracker-Reaktoren, einen Wasserstoffstripper und eine oder mehrere Destillationssäulen umfasst, wobei der in der Wasserstoffproduktionseinrichtung erzeugte Wasserstoff der Wasserstoffverdichtungseinrichtung zugeführt und in dieser verdichtet wird und der verdichtete Wasserstoff dem Iso-Cracker-Reaktor sowie dem Wasserstoffstripper der Raffinationseinrichtung zugeführt wird. Das zur Herstellung des Wasserstoffes notwendige Wasser wird der Wasserstoffproduktionseinrichtung vorzugsweise aus der Entsalzungseinrichtung zugeführt.

Gemäß einer weiteren bevorzugten Ausführungsform der vorliegenden Erfindung ist vorgesehen, dass die Raffinationseinrichtung einen Iso-Cracker-Reaktor umfasst, in dem ein Katalysator enthalten ist, der keine Sulfidierung erfordert. Vorzugsweise enthält der Katalysator ein Element ausgewählt aus der Gruppe bestehend aus Ruthenium, Rhodium, Palladium, Silber, Rhenium, Osmium, Iridium, Platin, Gold, Kupfer, Rhenium, Quecksilber und beliebigen Kombinationen von zwei oder mehr der vorgenannten Elemente. Besonders bevorzugt enthält der Katalysator Platin/Palladium. Besonders bevorzugt enthält die Anlage überhaupt keinen Katalysator, der eine Sulfidierung erfordert.

In Weiterbildung des Erfindungsgedankens wird es vorgeschlagen, dass der Wasserreinigungseinrichtung Wasser aus der Fischer-Tropsch-Einrichtung und Wasser aus der Raffinationseinrichtung zugeführt werden, das Wasser in der Wasserreinigungseinrichtung durch Teilverdampfung so gereinigt werden, dass mindestens 70% des Abwassers durch die Teilverdampfung und damit wenigstens 75% und bevorzugt wenigstens 95% aller Kohlenwasserstoffe abgetrennt werden. Der so abgetrennte Wasserdampf und die so abgetrennten Kohlenwasserstoffe werden dem Pre-Reformer zugeführt und das nicht-teilverdampfte Wasser mit einem CSB von weniger als 2.000 mg/l wird einer kommunalen Abwasseranlage zugeführt.

Vorzugsweise werden wenigstens 80%, weiter bevorzugt wenigstens 90%, besonders bevorzugt wenigstens 95% und höchst bevorzugt 100% des Wassers, welches in der Einrichtung zur getrennten Gewinnung von Kohlendioxid und Wasser aus der Umgebungsluft, in der Synthesegasherstellungseinrichtung, in der Trenneinrichtung sowie in der optionalen Wasserstoffverdichtungseinrichtung anfällt, der Entsalzungseinrichtung zugeführt.

Ferner ist es bevorzugt, dass in der Trenneinrichtung Kohlendioxid so vollständig aus dem Synthesegas abgetrennt wird, dass in dem Rückgas, welches in der Fischer-Tropsch-Einrichtung aus dem Synthesegas erzeugt wird, weniger als 5 Mass.-% Kohlendioxid enthalten sind.

Schließlich ist es bevorzugt, dass in der Raffinationseinrichtung Flugturbinenkraftstoff, Benzin und/oder Diesel und bevorzugt sowohl Flugturbinenkraftstoff als auch Benzin hergestellt werden.

Nachfolgend wird die vorliegende Erfindung unter Bezug auf die Zeichnung näher beschrieben, in der:

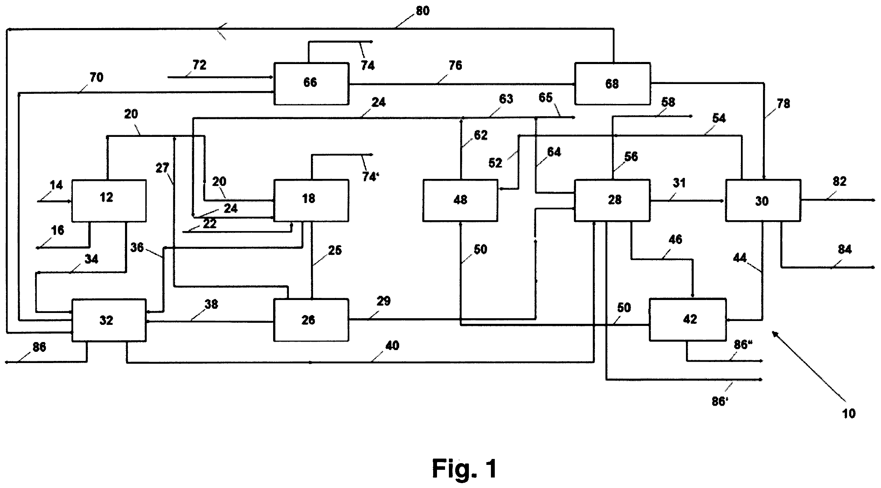

Fig. 1    eine schematische Ansicht einer zur Herstellung von synthetischen Kraftstoffen zeigt.

Die in der Figur 1 dargestellte Anlage 10 zur Herstellung von synthetischen Kraftstoffen umfasst:

a) eine Einrichtung 12 zur getrennten Gewinnung von Kohlendioxid und Wasser aus der Umgebungsluft mit einer Luftzufuhrleitung 14 und einer Abluftleitung 16,
b) eine Synthesegasherstellungseinrichtung 18 zur Herstellung eines Kohlenmonoxid, Wasserstoff, Kohlendioxid und Wasser umfassenden Rohsynthesegases, wobei die Synthesegasherstellungseinrichtung 18 eine von der Einrichtung 12 zur getrennten Gewinnung von Kohlendioxid und Wasser aus der Umgebungsluft führende Zufuhrleitung 20 für Kohlendioxid, eine Zufuhrleitung 22 für Luft und eine Zufuhrleitung 24 für Wasser bzw. Wasserdampf und eine Rohsynthesegasabfuhrleitung 25 aufweist,

c) eine Trenneinrichtung 26 zur Abtrennung von Kohlendioxid und Wasser aus dem in der Synthesegasherstellungseinrichtung 18 hergestelltes Rohsynthesegas mit einer Kohlendioxidrückfuhrleitung 27, welche von der Trenneinrichtung 26 in die von der Einrichtung 16 zur getrennten Gewinnung von Kohlendioxid und Wasser aus der Umgebungsluft zu der Synthesegasherstellungseinrichtung 18 führende Zufuhrleitung 20 für Kohlendioxid mündet,

d) eine Fischer-Tropsch-Einrichtung 28 zur Herstellung von Kohlenwasserstoffen durch ein Fischer-Tropsch-Verfahren aus dem Synthesegas, aus dem in der Trenneinrichtung 26 Kohlendioxid und Wasser abgetrennt wurden, wobei das Synthesegas der Fischer-Tropsch-Einrichtung 28 über eine von der Trenneinrichtung 26 in die Fischer-Tropsch-Einrichtung 28 führende Synthesegaszufuhrleitung 29 zugeführt wird,

e) eine Raffinationseinrichtung 30 zur Raffination der in der Fischer-Tropsch-Einrichtung 28 hergestellten Kohlenwasserstoffe zu den synthetischen Kraftstoffen, welche mit der Fischer-Tropsch-Einrichtung über eine Kohlenwasserstoffzufuhrleitung 31 verbunden ist,

f) eine Entsalzungseinrichtung 32 zur Entsalzung von Wasser, wobei die Entsalzungseinrichtung 32 eine Wasserzufuhrleitung 34 von der Einrichtung 12 zur getrennten Gewinnung von Kohlendioxid und Wasser aus der Umgebungsluft, eine Wasserzufuhrleitung 36 von der Synthesegasherstellungseinrichtung 18 und eine Wasserzufuhrleitung 38 von der Trenneinrichtung 26 sowie eine Wasserabfuhrleitung 40 zu der Fischer-Tropsch-Einrichtung 28 aufweist, und

g) eine Wasserreinigungseinrichtung 42, welche eine von der Raffinationseinrichtung 30 führende Wasserzufuhrleitung 44 und eine von der Fischer-Tropsch-Einrichtung 28 führende Wasserzufuhrleitung 46 jeweils zur Reinigung von darin anfallendem Wasser umfasst.

Ferner umfasst die Anlage 10 einen Pre-Reformer 48 zur Umwandlung höherer Kohlenwasserstoffe in Methan, Kohlenstoffoxide, Wasser und Wasserstoff. In den Pre-Reformer 48 führt eine von der Wasserreinigungseinrichtung 42 zu dem Pre-Reformer 48 führende Wasserdampfzufuhrleitung 50. Zudem führt in den Pre-Reformer 48 eine Zufuhrleitung 52 für Prozessgas und Rückgas, welche von der aus der Raffinationseinrichtung 30 führenden Prozessgasabfuhrleitung 54 und von der aus der Fischer-Tropsch-Einrichtung 28 führende Gasabfuhrleitung 56 gespeist wird. Ein Teil des aus der Fischer-Tropsch-Einrichtung 28 abgeführten Gases wird in die Zufuhrleitung 52 geleitet, wohingegen der Rest über die Fackelleitung 58 aus der Anlage 10 abgeführt wird. Von dem Pre-Reformer 48 führt eine Kreislaufleitung 62 in die Zufuhrleitung 24 für Wasser bzw. Wasserdampf und von dort in die Synthesegasherstellungseinrichtung 18 zur Zuführung der in dem Pre-Reformer 48 gebildeten Verbindungen Methan, Kohlenstoffoxide, Wasser und Wasserstoff in die Synthesegasherstellungseinrichtung 18. In die Zufuhrleitung 24 führt auch eine Wasserdampfrückführleitung 63, welche mit einer aus der Fischer-Tropsch-Einrichtung 28 führende Wasserdampfabfuhrleitung 64 verbunden ist. Die Wasserdampfabfuhrleitung 64 verzweigt sich in eine Wasserdampfrückführleitung 63 und in eine Wasserdampfüberschussleitung 65, welche von der Wasserdampfabfuhrleitung 64 wegführt.

Schließlich umfasst die Anlage 10 auch eine Wasserstoffproduktionseinrichtung 66, sowie eine Wasserstoffverdichtungseinrichtung 68 zur Herstellung von Wasserstoff, welcher in der Raffinationseinrichtung 30 benötigt wird. In die Wasserstoffproduktionseinrichtung 66 führt eine von der Entsalzungseinrichtung 32 kommende Wasserzufuhrleitung 70 sowie eine Luftzufuhrleitung 72. Zudem weist die Wasserstoffproduktionseinrichtung 66 eine Abluftleitung 74 sowie eine in die Wasserstoffverdichtungseinrichtung 68 führende Wasserstoffleitung 76 auf. Von der Wasserstoffverdichtungseinrichtung 68 führt eine Wasserstoffleitung 78 in die Raffinationseinrichtung 30 und eine Wasserleitung 80 in die Entsalzungseinrichtung 32.

Die Raffinationseinrichtung 30 umfasst einen oder mehrere Iso-Cracker-Reaktoren (nicht dargestellt), einen Wasserstoffstripper (nicht dargestellt) und eine oder mehrere Destillationssäulen (nicht dargestellt). Ferner umfasst die Raffinationseinrichtung 30 eine Kerosinleitung 82 und eine Benzinleitung 84.

Zudem führen Abwasserleitungen 86, 86', 86" aus der Entsalzungseinrichtung 32, aus der Fischer-Tropsch-Einrichtung 28 sowie aus der Wasserreinigungseinrichtung 42. Schließlich weist die Synthesegasherstellungseinrichtung 18 auch eine Abluftleitung 74' auf.

Bei dem Betrieb der Anlage 10 wird der Einrichtung 12 zur getrennten Gewinnung von Kohlendioxid und Wasser aus der Umgebungsluft über die Luftzufuhrleitung 16 Luft zugeführt, aus der in der Einrichtung 12 Kohlendioxid und Wasser abgetrennt werden. Verbleibende Abluft wird über die Abluftleitung 16 aus der Einrichtung 12 abgeleitet, wohingegen in der Einrichtung 12 das Wasser durch Kondensation von dem Kohlendioxid getrennt wird. Das abgetrennte Kohlendioxid wird über die Zufuhrleitung 20 in die Synthesegasherstellungseinrichtung 18 geleitet, in die ebenfalls über die Zufuhrleitungen 24, 22 Wasserdampf enthaltend Methan, Kohlenstoffoxide und Wasserstoff sowie Luft zugeführt werden. In der Synthesegasherstellungseinrichtung 18 wird ein Rohsynthesegas umfassend Kohlenmonoxid, Wasserstoff, Wasserdampf und Kohlendioxid hergestellt, von dem ein Großteil des Wassers durch Kondensation abgetrennt wird. Das abgetrennte Wasser wird über die Wasserzufuhrleitung 38 in die Entsalzungseinrichtung 32 geführt, wohingegen das Rohsynthesegas über die Leitung 25 in die Trenneinrichtung 26 geführt wird. Dort wird durch Absorption Kohlendioxid aus dem Rohsynthesegas abgetrennt, welches über die Leitung 27 in die Leitung 20 und über diese in die Synthesegasherstellungseinrichtung 18 geleitet wird. Zudem wird in der Trenneinrichtung 26 Wasser durch Kondensation aus dem Rohsynthesegas abgetrennt, welches über die Leitung 38 in die Entsalzungseinrichtung 32 geleitet wird. In die Entsalzungseinrichtung 32 wird auch das in der Einrichtung 12 abgetrennte Wasser über die Wasserzufuhrleitung 34 zugeführt. Das gereinigte Synthesegas schließlich wird über die Leitung 29 in die Fischer-Tropsch-Einrichtung 28 geführt, in der das Synthesegas zu vornehmlich normalparaffinischen Kohlenwasserstoffen umgesetzt wird. Diese Kohlenwasserstoffe werden über die Leitung 31 in die Raffinationseinrichtung 30 geleitet, in der diese durch Hydro-Isomerisierung und Cracken (Iso-Cracking) zu synthetischen Rohkraftstoffen umgesetzt werden, die dann in dem Wasserstoffstripper getrennt werden und in den ein oder mehreren Destillationssäulen der Raffinationseinrichtung 30 in die Fraktionen Kerosin und Benzin aufgetrennt werden, welche über die Leitungen 82, 84 aus der Anlage 10 abgeführt werden. In der Fischer-Tropsch-Einrichtung 28 und in der Raffinationseinheit 30 anfallendes Wasser wird über die Leitungen 46, 44 in die Wasserreinigungseinrichtung 42 geleitet, in der das Abwasser durch Teilverdampfung gereinigt wird. Die in der Fischer-Tropsch-Einrichtung 28 durchgeführte Reaktion ist eine sehr stark exotherme Reaktion, die gekühlt werden muss. Zu diesem Zweck wird aus der Entsalzungseinrichtung 32 vollentsalztes Wasser der Fischer-Tropsch-Einrichtung 28 über die Wasserabfuhrleitung 40 zugeführt, wobei die anfallende Reaktionswärme der Fischer-Tropsch-Synthese durch die Erzeugung von Wasserdampf über die Wasserdampfabfuhrleitung 64 abgeführt wird. Der Wasserdampf wird zum größten Teil über die Wasserdampfrückführleitung 63 und die Zufuhrleitung 24 der Synthesegasherstellungseinrichtung 18 zugeführt, wohingegen der überschüssige Wasserdampf aus der Fischer-Tropsch-Einrichtung 28 über die Wasserdampfüberschussleitung 65 abgeführt wird und beispielsweise dazu verwendet wird, um das Abwasser, welches aus der Fischer-Tropsch-Einrichtung 28 über die Wasserzufuhrleitung 46 zu der Wasserreinigungseinrichtung 42 führt, zu verdampfen. Der über die zu dem Pre-Reformer 48 führende Wasserdampfzufuhrleitung 50 abgeführte Wasserdampfstrom enthält ca. 2% Kohlenwasserstoffe, die in dem Pre-Reformer 48 zu Methan, Kohlenstoffoxiden, Wasser und Wasserstoff umgewandelt werden. Das verbleibende gereinigte Abwasser wird über die Leitung 86" in die städtische Abwasserreinigung geleitet. Zudem werden in der Fischer-Tropsch-Einrichtung 28 anfallendes Rückgas und in der Raffination anfallendes Prozessgas über die Leitungen 54, 56, 52 in den Pre-Reformer 48 geleitet, in dem höhere Kohlenwasserstoffe in Methan, Kohlenstoffoxide, Wasser und Wasserstoff umgewandelt werden. Der in dem Pre-Reformer 48 anfallende, Methan, Kohlenstoffoxide, Wasser und Wasserstoff umfassende Strom wird über die Kreislaufleitung 62 zusammen mit dem aus der Wasserdampfrückführleitung 63 kommenden Wasserdampfstrom zu der Zufuhrleitung 24 und von dort zu der Synthesegasherstellungseinrichtung 18 geführt.

In der Wasserstoffproduktionseinrichtung 66 wird aus der über die Leitung 72 zugeführten Luft und dem über die Leitung 70 zugeführten Wasser Wasserstoff erzeugt, der als Gemisch mit Wasserdampf über die Leitung 76 der Wasserstoffverdichtungseinrichtung 68 zugeführt wird, in welcher der Wasserstoff auf den erforderlichen Druck verdichtet und gleichzeitig das enthaltene Wasser durch Kondensation abgetrennt wird. Während der verdichtete Wasserstoff der Raffinationseinrichtung 30 über die Leitung 78 zugeführt wird, wird das abgetrennte Wasser über die Leitung 80 in die Entsalzungseinrichtung 32 geleitet.

Nachfolgend wird die vorliegende Erfindung anhand eines illustrativen, aber die Erfindung nicht einschränkenden Beispiels beschrieben.

**Beispiel**

Es wurde das erfindungsgemäße Verfahren in einer in der Figur 1 gezeigten und vorstehend beschriebenen Anlage mit der Prozesssimulationssoftware PRO/II (AVEVA) zur Herstellung von 15.000 Litern Kerosin pro Tag simuliert. Dabei wurden folgende für die einzelnen Leitungen folgende Produktströme erhalten:

| Nr. | Bezeichnung | kg/h | Nm$^3$/h |
|---|---|---|---|
| 14 | Luftzufuhrleitung | | 9576623 |
| 20 | Zufuhrleitung für Kohlendioxid zu der Syntheseqasherstellungseinrichtung | 3941 | |
| 22 | Zufuhrleitung für Luft zu der Synthesegasherstellungseinrichtung | 7093 | |
| 24 | Zufuhrleitung für Wasser bzw. Wasserdampf zu der Synthesegasherstellungseinrichtung | 4137 | |
| 25 | Rohsynthesegasabfuhrleitung in die Trenneinrichtung | 4407 | |
| 27 | Kohlendioxidrückfuhrleitung von Trenneinrichtung | 1216 | |

(fortgesetzt)

| Nr. | Bezeichnung | kg/h | Nm³/h |
|---|---|---|---|
| 29 | Synthesegaszufuhrleitung von der Trenneinrichtung zu der Fischer-Tropsch-Einrichtung | 2794 | |
| 31 | Kohlenwasserstoffzufuhrleitung | 834 | |
| 34 | Wasserzufuhrleitung von der Einrichtung zur getrennten Gewinnung von Kohlendioxid und Wasser aus der Umgebungsluft in die Entsalzungseinrichtung | 4501 | |
| 36 | Wasserzufuhrleitung von der Synthesegasherstellungseinrichtung in die Entsalzungseinrichtung | 552 | |
| 38 | Wasserzufuhrleitung von der von der Trenneinrichtung in die Entsalzungseinrichtung | 397 | |
| 40 | Wasserabfuhrleitung von der Entsalzungseinrichtung zu der Fischer-Tropsch-Einrichtung | 4415 | |
| 44 | Wasserzufuhrleitung von der Raffinationseinrichtung zu der Wasserreinigungseinrichtung | 3.2 | |
| 46 | Wasserzufuhrleitung von der Fischer-Tropsch-Einrichtung zu der Wasserreinigungseinrichtung | 1413 | |
| 50 | Wasserdampfzufuhrleitung zu dem Pre-Reformer | 999 | |
| 52 | Zufuhrleitung für Brenngas und Rückgas in den Pre-Reformer | 576 | |
| 54 | Brenngasabfuhrleitung | 65 | |
| 56 | Gasabfuhrleitung | 547 | |
| 58 | Fackelgasabfuhrleitung | 37 | |
| 62 | Kreislaufleitung aus dem Pre-Reformer | 1575 | |
| 63 | Wasserdampfrückführleitung aus der Fischer-Tropsch-Einrichtung | 2562 | |
| 64 | Wasserdampfabfuhrleitung aus der Fischer-Tropsch-Einrichtung | 4349 | |
| 65 | Wasserdampfüberschussleitung aus der Fischer-Tropsch-Einrichtung | 1786 | |
| 70 | Wasserzufuhrleitung zu der Wasserstoffproduktionseinrichtung | 172 | |
| 72 | Luftzufuhrleitung | | 21130 |
| 76 | Wasserstoffleitung in die Wasserstoffverdichtungseinrichtung | 20.7 | |
| 78 | Wasserstoffleitung in die Raffinationseinrichtung | 18.9 | |
| 80 | Wasserabfuhrleitung in die Entsalzungseinrichtung | 1.8 | |
| 82 | Kerosinleitung | 484 | |
| 84 | Benzinleitung | 300 | |
| 86 | Abwasserleitung | 865 | |
| 86' | Abwasserleitung | 66 | |
| 86" | Abwasserleitung | 418 | |

**Bezugszeichenliste**

| | |
|---|---|
| 10 | Anlage zur Herstellung von synthetischen Kraftstoffen |
| 12 | Einrichtung zur getrennten Gewinnung von Kohlendioxid und Wasser aus der Umgebungsluft |
| 14 | Luftzufuhrleitung |
| 16 | Abluftleitung |
| 18 | Synthesegasherstellungseinrichtung |

| 20 | Zufuhrleitung für Kohlendioxid zu der Synthesegasherstellungseinrichtung |
| 22 | Zufuhrleitung für Luft zu der Synthesegasherstellungseinrichtung |
| 24 | Zufuhrleitung für Wasser bzw. Wasserdampf zu der Synthesegasherstellungseinrichtung |
| 25 | Rohsynthesegasabfuhrleitung in die Trenneinrichtung |
| 26 | Trenneinrichtung zur Abtrennung von Kohlendioxid und Wasser aus Rohsynthesegas |
| 27 | Kohlendioxidrückführleitung von Trenneinrichtung |
| 28 | Fischer-Tropsch-Einrichtung |
| 29 | Synthesegaszufuhrleitung von der Trenneinrichtung zu der FischerTropsch-Einrichtung |
| 30 | Raffinationseinrichtung |
| 31 | Kohlenwasserstoffzufuhrleitung |
| 32 | Entsalzungseinrichtung |
| 34 | Wasserzufuhrleitung von der Einrichtung zur getrennten Gewinnung von Kohlendioxid und Wasser aus der Umgebungsluft in die Entsalzungseinrichtung |
| 36 | Wasserzufuhrleitung von der Synthesegasherstellungseinrichtung in die Entsalzungseinrichtung |
| 38 | Wasserzufuhrleitung von der von der Trenneinrichtung in die Entsalzungseinrichtung |
| 40 | Wasserabfuhrleitung von der Entsalzungseinrichtung zu der Fischer-Tropsch-Einrichtung |
| 42 | Wasserreinigungseinrichtung |
| 44 | Wasserzufuhrleitung von der Raffinationseinrichtung zu der Wasserreinigungseinrichtung |
| 46 | Wasserzufuhrleitung von der Fischer-Tropsch-Einrichtung zu der Wasserreinigungseinrichtung |
| 48 | Pre-Reformer |
| 50 | Wasserdampfzufuhrleitung zu dem Pre-Reformer |
| 52 | Zufuhrleitung für Prozessgas und Rückgas in den Pre-Reformer |
| 54 | Prozessgasabfuhrleitung |
| 56 | Gasabfuhrleitung |
| 58 | Fackelgasabfuhrleitung |
| 62 | Kreislaufleitung aus dem Pre-Reformer |
| 63 | Wasserdampfrückführleitung aus der Fischer-Tropsch-Einrichtung |
| 64 | Wasserdampfabfuhrleitung aus der Fischer-Tropsch-Einrichtung |
| 65 | Wasserdampfüberschussleitung aus der Fischer-Tropsch-Einrichtung |
| 66 | Wasserstoffproduktionseinrichtung |
| 68 | Wasserstoffverdichtungseinrichtung |
| 70 | Wasserzufuhrleitung zu der Wasserstoffproduktionseinrichtung |
| 72 | Luftzufuhrleitung |
| 74, 74' | Abluftleitung |
| 76 | Wasserstoffleitung in die Wasserstoffverdichtungseinrichtung |
| 78 | Wasserstoffleitung in die Raffinationseinrichtung |
| 80 | Wasserabfuhrleitung in die Entsalzungseinrichtung |
| 82 | Kerosinleitung |
| 84 | Benzinleitung |
| 86, 86', 86" | Abwasserleitung |

**Patentansprüche**

1. Anlage (10) zur Herstellung von synthetischen Kraftstoffen, insbesondere von Flugturbinenkraftstoff (Kerosin), Benzin und/oder Diesel, umfassend:

   a) eine Einrichtung (12) zur getrennten Gewinnung von Kohlendioxid und Wasser aus der Umgebungsluft,
   b) eine Synthesegasherstellungseinrichtung (18) zur Herstellung eines Kohlenmonoxid, Wasserstoff, Kohlendioxid und Wasser umfassenden Rohsynthesegases, wobei die Synthesegasherstellungseinrichtung (18) eine von der Einrichtung (12) zur getrennten Gewinnung von Kohlendioxid und Wasser aus der Umgebungsluft führende Zufuhrleitung (20) für Kohlendioxid, eine Zufuhrleitung (22) für Luft und eine Zufuhrleitung (24) für Wasser aufweist,
   c) eine Trenneinrichtung (26) zur Abtrennung von Kohlendioxid und Wasser aus dem in der Synthesegasherstellungseinrichtung (18) hergestellten Rohsynthesegas,
   d) eine Fischer-Tropsch-Einrichtung (28) zur Herstellung von Kohlenwasserstoffen durch ein Fischer-Tropsch-Verfahren aus dem Synthesegas, aus dem in der Trenneinrichtung (26) Kohlendioxid und Wasser abgetrennt wurden,

e) eine Raffinationseinrichtung (30) zur Raffination der in der Fischer-Tropsch-Einrichtung (28) hergestellten Kohlenwasserstoffe zu den synthetischen Kraftstoffen,

f) eine Entsalzungseinrichtung (32) zur Entsalzung von Wasser, wobei die Entsalzungseinrichtung (32) eine Wasserzufuhrleitung (34) von der Einrichtung (12) zur getrennten Gewinnung von Kohlendioxid und Wasser aus der Umgebungsluft sowie eine Wasserabfuhrleitung (40) zu der Fischer-Tropsch-Einrichtung (28) aufweist, und

g) eine Wasserreinigungseinrichtung (42), welche eine von der Fischer-Tropsch-Einrichtung (28) führende Wasserzufuhrleitung (46) zur Reinigung von darin anfallendem Wasser umfasst,

wobei die Anlage ferner einen Pre-Reformer (48) zur Umwandlung von in der Fischer-Tropsch-Einrichtung und in der Raffinationseinrichtung angefallenen Kohlenwasserstoffen in Methan, Kohlenstoffoxide, Wasser und Wasserstoff aufweist sowie i) eine von der Wasserreinigungseinrichtung (42) zu dem Pre-Reformer (48) führende Wasserdampfzufuhrleitung (50), ii) eine von der Raffinationseinrichtung (30) in den Pre-Reformer (48) führende Prozessgaszufuhrleitung (54, 52) und/oder eine von der Fischer-Tropsch-Einrichtung (28) in den Pre-Reformer (48) führende Rückgasleitung (56, 52) und iii) eine von dem Pre-Reformer (48) in die mit der Synthesegasherstellungseinrichtung (18) verbundene Zufuhrleitung (24) für Wasser führende Kreislaufleitung (62) aufweist.

2. Anlage (10) nach Anspruch 1, **dadurch gekennzeichnet, dass** diese keine Frischwasserzufuhrleitung aufweist.

3. Anlage (10) nach Anspruch 1 oder 2, **dadurch gekennzeichnet, dass** die Wasserreinigungseinrichtung (42) als Teilverdampfer ausgestaltet ist, in dem neben Wasser auch darin enthaltene Kohlenwasserstoffe teilverdampft werden.

4. Anlage (10) nach zumindest einem der vorhergehenden Ansprüche,
**dadurch gekennzeichnet, dass** die Raffinationseinrichtung (30) wenigstens einen Iso-Cracker-Reaktor umfasst, wobei der wenigstens eine Iso-Cracker-Reaktor einen Katalysator aufweist, der keine Sulfidierung erfordert, und bevorzugt einen Edelmetall-Katalysator aufweist.

5. Anlage (10) nach zumindest einem der vorhergehenden Ansprüche,
**dadurch gekennzeichnet, dass** die Entsalzungseinrichtung (32) zur Entsalzung von Wasser auch eine Wasserzufuhrleitung (36) von der Synthesegasherstellungseinrichtung (18) und eine Wasserzufuhrleitung (38) von der Trenneinrichtung (26) aufweist.

6. Anlage (10) nach zumindest einem der vorhergehenden Ansprüche, **dadurch gekennzeichnet, dass** die Wasserreinigungseinrichtung (42) auch eine von der Raffinationseinrichtung (30) führende Wasserzufuhrleitung (44) zur Reinigung von darin anfallendem Wasser umfasst.

7. Anlage (10) nach zumindest einem der vorhergehenden Ansprüche,
**dadurch gekennzeichnet, dass** die Synthesegasherstellungseinrichtung (18) eine oder mehrere Co-Solid-Oxid-Elektrolysezellen umfasst.

8. Anlage (10) nach zumindest einem der vorhergehenden Ansprüche, **dadurch gekennzeichnet, dass** die Trenneinrichtung (26) einen Aminwäscher zur Abtrennung von Kohlendioxid durch Absorption aus dem Synthesegas, einen Verdichter zur Kondensation von Wasser und zur Verdichtung des Gases auf den in der Fischer-Tropsch-Synthese erforderlichen Druck, eine zu der Synthesegasherstellungseinrichtung (18) oder in die von der Einrichtung (12) zur getrennten Gewinnung von Kohlendioxid und Wasser in die Synthesegasherstellungseinrichtung (18) führende Leitung (20) für Kohlendioxid führende Kohlendioxidrückführleitung (27) sowie eine zu der Fischer-Tropsch-Einrichtung (28) führende Synthesegaszufuhrleitung (29) umfasst.

9. Anlage (10) nach zumindest einem der vorhergehenden Ansprüche, **dadurch gekennzeichnet, dass** die Entsalzungseinrichtung (32) einen oder mehrere Anionen- und Kationenaustauscher sowie eine Membraneinrichtung zur Entgasung umfasst, welche derart ausgelegt sind, dass Wasser soweit entsalzt und entgast werden kann, dass dessen Leitfähigkeit bei kleiner 20 $\mu$S/cm, bevorzugt kleiner 10 $\mu$S/cm, besonders bevorzugt kleiner 5 $\mu$S/cm und höchst bevorzugt maximal 2 $\mu$S/cm liegt.

10. Anlage (10) nach zumindest einem der vorhergehenden Ansprüche,
**dadurch gekennzeichnet, dass** diese ferner eine Wasserstoffproduktionseinrichtung (66) sowie eine Wasserstoffverdichtungseinrichtung (68) aufweist, wobei die Anlage (10) ferner eine von der Einrichtung (12) zur Entsalzung von Wasser zu der Wasserstoffproduktionseinrichtung (66) führende Wasserleitung (70), eine von der Wasserstoffverdichtungseinrichtung (68) zu der Entsalzungseinrichtung (32) führende Wasserleitung (80), eine von der Wasserstoffproduktionseinrichtung (66) zu der Wasserstoffverdichtungseinrichtung (68) führende Wasserstoffleitung (76) sowie eine von der Wasserstoffverdichtungseinrichtung (68) zu der Raffinationseinrichtung (30) führende Wasserstoffleitung (78) aufweist.

11. Verfahren zur Herstellung von synthetischen Kraftstoffen, insbesondere von Flugturbinenkraftstoff (Kerosin), Benzin und/oder Diesel, welches in einer Anlage (10) nach zumindest einem der vorhergehenden Ansprüche durchgeführt wird.

12. Verfahren nach Anspruch 11, **dadurch gekennzeichnet, dass** bei dem Verfahren weniger als 20%, bevorzugt weniger als 10%, besonders bevorzugt weniger als 5% und höchst bevorzugt gar kein Frischwasser zugeführt wird, wobei Frischwasserzufuhr die Zufuhr von jeglichem Wasser von außen in die Anlage bezeichnet, welches nicht in der Einrichtung zur getrennten Gewinnung von Kohlendioxid und Wasser aus der Umgebungsluft gewonnen worden ist.

13. Verfahren nach Anspruch 11 oder 12, **dadurch gekennzeichnet, dass** in der Entsalzungseinrichtung (32) das Wasser zu Wasser mit einer Leitfähigkeit von kleiner 20 µS/cm, bevorzugt kleiner 10 µS/cm, besonders bevorzugt kleiner 5 µS/cm und höchst bevorzugt maximal 2 µS/cm gereinigt wird.

14. Verfahren nach zumindest einem der Ansprüche 11 bis 13, **dadurch gekennzeichnet, dass** aus der Fischer-Tropsch-Einrichtung (28) Fackelgas abgeleitet wird, wobei der Fackelgasstrom größer ist als der Quotient von aus dem aus der Einrichtung (12) zur getrennten Gewinnung von Kohlendioxid und Wasser aus der Umgebungsluft abgeführten Strom enthaltenem Mengenstrom von Stickstoff und von Argon und der in dem Rückgasstrom von der Fischer-Tropsch-Einrichtung (28) in den Pre-Reformer (48) eingestellten Gesamtkonzentration von Stickstoff und von Argon, wobei die Gesamtkonzentration von Stickstoff und von Argon in dem Rückgasstrom von der Fischer-Tropsch-Einrichtung (28) in den Pre-Reformer (48) vorzugsweise auf 1,5 bis 10 Mass.-% eingestellt wird.

15. Verfahren nach zumindest einem der Ansprüche 11 bis 14, **dadurch gekennzeichnet, dass** die Anlage (10) eine Wasserstoffproduktionseinrichtung (66) sowie eine Wasserstoffverdichtungseinrichtung (68) aufweist und die Raffinationseinrichtung (30) einen oder mehrere Iso-Cracker-Reaktoren, einen Wasserstoffstripper und eine oder mehrere Destillationssäulen umfasst, wobei der in der Wasserstoffproduktionseinrichtung (66) erzeugte Wasserstoff der Wasserstoffverdichtungseinrichtung (68) zugeführt und in dieser verdichtet wird und der verdichtete Wasserstoff dem Wasserstoffstripper der Raffinationseinrichtung (30) zugeführt wird.

**Claims**

1. A system (10) for producing synthetic fuels, in particular jet fuel (kerosene), petrol and/or diesel, comprising:

    a) a device (12) for separately obtaining carbon dioxide and water from the ambient air,
    b) a synthesis gas producing device (18) for producing a raw synthesis gas comprising carbon monoxide, hydrogen, carbon dioxide and water, the synthesis gas producing device (18) having a supply line (20) for carbon dioxide, coming from the device (12) for separately obtaining carbon dioxide and water from the ambient air, a supply line (22) for air, and a supply line (24) for water,
    c) a separation device (26) for separating carbon dioxide and water from the raw synthesis gas produced in the synthesis gas producing device (18),
    d) a Fischer-Tropsch device (28) for producing hydrocarbons by a Fischer-Tropsch method from the synthesis gas from which carbon dioxide and water have been separated in the separation device (26),
    e) a refining device (30) for refining the hydrocarbons produced in the Fischer-Tropsch device (28) into synthetic fuels,
    f) a desalination device (32) for desalinating water, wherein the desalination device (32) has a water supply line (34) from the device (12) for separately obtaining carbon dioxide and water from the ambient air, as well as a water discharge line (40) to the Fischer-Tropsch device (28), and
    g) a water purification device (42) which comprises a water supply line (46) coming from the Fischer-Tropsch device and intended for purifying water accumulating therein,

    wherein the system further has a pre-reformer (48) for converting hydrocarbons accumulated in the Fischer-Tropsch device and in the refining device into methane, carbon oxide, water, and hydrogen, as well as i) a water vapor supply line (50) leading from the water purification device (42) to the pre-reformer (48), ii) a process gas supply line (54, 52) leading from the refining device (30) into pre-reformer (48), and/or a return gas line (56, 52) leading from the Fischer-Tropsch device (28) into the pre-reformer (48), and iii) a circulating line (62) leading from the pre-reformer (48) into the supply line (24) for water connected to the synthesis gas producing device (18).

2.  The system (10) according to claim 1, **characterized in that** it has no fresh water supply line.

3.  The system (10) according to claim 1 or 2, **characterized in that** the water purification device (42) is configured as a partial evaporator in which in addition to water also carbohydrates contained therein are partially evaporated.

4.  The system (10) according to at least one of the preceding claims, **characterized in that** the refining device (30) comprises at least one isocracking reactor, wherein the at least one isocracking reactor has a catalyst that does not require sulphidation, and preferably has a noble metal catalyst.

5.  The system (10) according to at least one of the preceding claims, **characterized in that** the desalination device (32) for desalinating water also has a water supply line (36) from the synthesis gas producing device (18) and a water supply line (38) from the separation device (26).

6.  The system (10) according to at least one of the preceding claims, **characterized in that** the water purification device (42) also comprises a water supply line (44) coming from the refining device (30) for purifying water accumulating therein.

7.  The system (10) according to at least one of the preceding claims, **characterized in that** the synthesis gas producing device (18) comprises one or more co-solid oxide electrolytic cells.

8.  The system (10) according to at least one of the preceding claims, **characterized in that** the separation device (26) comprises an amine scrubber for separating carbon dioxide by absorption from the synthesis gas, a compressor for condensing water and for compressing gas at the pressure required in the Fischer-Tropsch synthesis, a carbon dioxide return line (27) leading to the synthesis gas producing device (18) or into the line (20) for carbon dioxide leading from the device (12) for separately obtaining carbon dioxide and water in the synthesis gas producing device (18), as well as a synthesis gas supply line (29) leading to the Fischer-Tropsch device (28).

9.  The system (10) according to at least one of the preceding claims, **characterized in that** the desalination device (32) comprises one or more anion and cation exchangers as well as a membrane device for degassing which is configured so that water can be desalinated and degassed up to a point where the conductivity thereof is less than 20 $\mu$S/cm, preferably less than 10 $\mu$S/cm, particularly preferably less than 5 $\mu$S/cm and most preferably a maximum of 2 $\mu$S/cm.

10. The system (10) according to at least one of the preceding claims, **characterized in** further comprising a hydrogen generating device (66) as well as a hydrogen compression device (68), wherein the system (10) further has a water line (70) leading from the device (12) for desalinating water to the hydrogen generating device (66), a water line (80) leading from the hydrogen compression device (68) to the desalination device (32), a hydrogen line (76) leading from the hydrogen generating device (66) to the hydrogen compression device (68), as well as a hydrogen line (78) leading from the hydrogen compression device (68) to the refining device (30).

11. A method for producing synthetic fuels, in particular jet fuel (kerosene), petrol and/or diesel, which is performed in a system (10) according to at least one of the preceding claims.

12. The method according to claim 11, **characterized in that** in the method less than 20%, preferably less than 10%, particularly preferably less than 5% and most preferably no fresh water at all is added, wherein fresh water supply is the supply of any kind of water from the outside into the system which has not been obtained inside the device for separately obtaining carbon dioxide and water from the ambient air.

13. The method according to claim 11 or 12, **characterized in that** in the desalination device (32), water is purified into water having a conductivity of less than 20 $\mu$S/cm, preferably less than 10 $\mu$S/cm, particularly preferably less than 5 $\mu$S/cm and most preferably a maximum of 2 $\mu$S/cm.

**14.** The method according to at least one of claims 11 to 13, **characterized in that** flare gas is derived from the Fischer-Tropsch device (28), wherein the flare gas flow is greater than the ratio of the rate of flow of nitrogen and argon contained in the flow discharged from the device (12) for separately obtaining carbon dioxide and water from the ambient air and the total concentration of nitrogen and argon set in the return gas flow from the Fischer-Tropsch device (28) into the pre-reformer (48), wherein the total concentration of nitrogen and argon in the return gas flow from the Fischer-Tropsch device (28) into the pre-reformer (48) is preferably set to 1.5 to 10 mass percent.

**15.** The method according to at least one of claims 11 to 14, **characterized in that** the system (10) has a hydrogen generating device (66) as well as a hydrogen compression device (68), and the refining device (30) comprises one or more isocracking reactors, a hydrogen stripper, and one or more distillation columns, wherein hydrogen produced in the hydrogen generating device (66) is supplied to the hydrogen compression device (68) and compressed therein, and the compressed hydrogen is supplied to the hydrogen stripper of the refining device (30).

**Revendications**

**1.** Installation (10) de production de combustibles synthétiques, en particulier de carburéacteur (kérosène), d'essence et/ou de diesel, comprenant :

    a) un dispositif (12) permettant d'obtenir séparément du dioxyde de carbone et de l'eau à partir de l'air ambiant,
    b) un dispositif de production de gaz de synthèse (18) permettant de produire un gaz de synthèse brut comprenant du monoxyde de carbone, de l'hydrogène, du dioxyde de carbone et de l'eau, le dispositif de production de gaz de synthèse (18) présentant une conduite d'alimentation (20) pour le dioxyde de carbone allant du dispositif (12) permettant d'obtenir séparément du dioxyde de carbone et de l'eau à partir de l'air ambiant, une conduite d'alimentation (22) pour l'air et une conduite d'alimentation (24) pour l'eau,
    c) un dispositif de séparation (26) permettant de séparer le dioxyde de carbone et l'eau du gaz de synthèse brut produit dans le dispositif de production de gaz de synthèse (18),
    d) un dispositif Fischer-Tropsch (28) permettant de produire des hydrocarbures par un procédé Fischer-Tropsch à partir du gaz de synthèse duquel le dioxyde de carbone et l'eau ont été séparés dans le dispositif de séparation (26),
    e) un dispositif de raffinage (30) permettant de raffiner les hydrocarbures produits dans le dispositif Fischer-Tropsch (28) en combustibles synthétiques,
    f) un dispositif de dessalement (32) permettant de dessaler l'eau, le dispositif de dessalement (32) comportant une conduite d'alimentation en eau (34) provenant du dispositif (12) permettant d'obtenir séparément du dioxyde de carbone et de l'eau à partir de l'air ambiant, ainsi qu'une conduite d'évacuation d'eau (40) conduisant au dispositif Fischer-Tropsch (28), et
    g) un dispositif de purification d'eau (42) qui comprend une conduite d'alimentation en eau (46) provenant du dispositif Fischer-Tropsch et destinée à purifier l'eau produite dans celle-ci,

dans laquelle l'installation présente en outre un pré-reformeur (48) permettant de convertir les hydrocarbures produits dans le dispositif Fischer-Tropsch et dans le dispositif de raffinage en méthane, en oxydes de carbone et en hydrogène, et i) une conduite d'alimentation en vapeur d'eau (50) conduisant du dispositif de purification d'eau (42) au pré-reformeur (48), ii) une conduite d'alimentation en gaz de processus (54, 52) conduisant du dispositif de raffinage (30) dans le pré-reformeur (48), et/ou une conduite de gaz recyclé (56, 52) conduisant du dispositif Fischer-Tropsch (28) dans le pré-reformeur (48), et iii) une conduite de recyclage (62) conduisant du pré-reformeur (48) à la conduite d'alimentation en eau (24) raccordée au dispositif de production de gaz de synthèse (18).

**2.** Installation (10) selon la revendication 1, **caractérisée en ce qu'**elle ne comprend aucune conduite d'alimentation en eau fraîche.

**3.** Installation (10) selon la revendication 1 ou 2, **caractérisée en ce que** le dispositif de purification d'eau (42) est configuré comme un évaporateur partiel dans lequel, en plus de l'eau, aussi des hydrocarbures contenus dans celui-ci sont partiellement évaporés.

**4.** Installation (10) selon au moins l'une des revendications précédentes, **caractérisée en ce que** le dispositif de raffinage (30) comprend au moins un réacteur d'isocracking, dans laquelle ledit au moins un réacteur d'isocracking présente un catalyseur qui ne nécessite aucune sulfuration, et présente de préférence un catalyseur à métaux précieux.

**5.** Installation (10) selon au moins l'une des revendications précédentes, **caractérisée en ce que** le dispositif de dessalement (32) présente pour le dessalement d'eau également une conduite d'alimentation en eau (36) provenant du dispositif de production de gaz de synthèse (18) et une conduite d'alimentation en eau (38) provenant du dispositif de séparation (26).

**6.** Installation (10) selon au moins l'une des revendications précédentes, **caractérisée en ce que** le dispositif de purification d'eau (42) comprend aussi une conduite d'alimentation en eau (44) provenant du dispositif de raffinage (30) et destinée à purifier l'eau produite dans celle-ci.

**7.** Installation (10) selon au moins l'une des revendications précédentes, **caractérisée en ce que** le dispositif de production de gaz de synthèse (18) comprend une ou plusieurs cellules d'électrolyse à oxyde co-solide.

**8.** Installation (10) selon au moins l'une des revendications précédentes, **caractérisée en ce que** le dispositif de séparation (26) comprend un épurateur d'amines permettant de séparer le dioxyde de carbone par absorption à partir du gaz de synthèse, un compresseur permettant de condenser l'eau et de comprimer le gaz à la pression nécessaire à la synthèse Fischer-Tropsch, une conduite de retour de dioxyde de carbone (27) conduisant au dispositif de production de gaz de synthèse (18) ou dans la conduite (20) pour le dioxyde de carbone conduisant du dispositif (12) permettant d'obtenir séparément du dioxyde de carbone et de l'eau dans le dispositif de production de gaz de synthèse (18), ainsi qu'une conduite d'alimentation en gaz de synthèse (29) conduisant au dispositif Fischer-Tropsch (28)

**9.** Installation (10) selon au moins l'une des revendications précédentes, **caractérisée en ce que** le dispositif de dessalement (32) comprend un ou plusieurs échangeurs d'anions et de cations ainsi qu'un dispositif à membrane permettant le dégazage qui est configuré de sorte que l'eau peut être dessalée et dégazée à tel point que sa conductibilité soit inférieure à 20 $\mu$S/cm, de préférence inférieure à 10 $\mu$S/cm, de manière particulièrement préférée inférieure à 5 $\mu$S/cm et de la plus grande préférence au maximum égale à 2 $\mu$S/cm.

**10.** Installation (10) selon au moins l'une des revendications précédentes, **caractérisée en ce qu'**elle comprend en outre un dispositif de génération d'hydrogène (66) ainsi qu'un dispositif de compression d'hydrogène (68), l'installation (10) présentant en outre une conduite d'eau (70) conduisant du dispositif (12) permettant de dessaler l'eau au dispositif de génération d'hydrogène (66), une conduite d'eau (80) conduisant du dispositif de compression d'hydrogène (68) au dispositif de dessalement (32), une conduite d'hydrogène (76) conduisant du dispositif de génération d'hydrogène (66) au dispositif de compression d'hydrogène (68), ainsi qu'une conduite d'hydrogène (78) conduisant du dispositif de compression d'hydrogène (68) au dispositif de raffinage (30).

**11.** Procédé de production de combustibles synthétiques, en particulier de carburéacteur (kérosène), d'essence et/ou de diesel, qui est effectué dans une installation (10) selon au moins l'une des revendications précédentes.

**12.** Procédé selon la revendication 11, **caractérisé en ce que** dans le procédé moins de 20 %, de préférence moins de 10 %, de manière particulièrement préférée moins de 5 % et de la plus grande préférence pas d'eau fraîche du tout est ajoutée, dans lequel l'alimentation en eau fraîche désigne l'alimentation de toute eau de l'extérieur à l'intérieur de l'installation qui n'a pas été obtenue dans le dispositif permettant d'obtenir séparément du dioxyde de carbone et de l'eau à partir de l'air ambiant.

**13.** Procédé selon la revendication 11 ou 12, **caractérisé en ce que** dans le dispositif de dessalement (32), l'eau est purifiée en eau ayant une conductibilité inférieure à 20 $\mu$S/cm, de préférence inférieure à 10 $\mu$S/cm, de manière particulièrement préférée inférieure à 5 $\mu$S/cm et de la plus grande préférence au maximum égale à 2 $\mu$S/cm.

**14.** Procédé selon au moins l'une des revendications 11 à 13, **caractérisé en ce que** du gaz de torche est dérivé du dispositif Fischer-Tropsch (28), le flux de gaz de torche étant supérieur au quotient du débit d'azote et d'argon contenu dans le flux évacué du dispositif (12) permettant d'obtenir séparément du dioxyde de carbone et de l'eau à partir de l'air ambiant et la concentration totale d'azote et d'argon réglée dans le flux de gaz recyclé du dispositif Fischer-Tropsch (28) dans le pré-reformeur (48), dans lequel la concentration totale d'azote et d'argon dans le flux de gaz recyclé du dispositif Fischer-Tropsch (28) au pré-reformeur (48) est de préférence réglée sur 1,5 à 10 % en masse.

**15.** Procédé selon au moins l'une des revendications 11 à 14, **caractérisé en ce que** l'installation (10) présente un dispositif de génération d'hydrogène (66) ainsi qu'un dispositif de compression d'hydrogène (68), et le dispositif de raffinage (30) comprend un ou more réacteurs d'isocracking, un distillateur d'hydrogène, et une ou plusieurs colonnes de distillation, dans lequel l'hydrogène produit dans le dispositif de génération d'hydrogène (66) est alimenté au dispositif de compression d'hydrogène (68) et comprimé dans celui-ci, et l'hydrogène comprimé est alimenté au distillateur d'hydrogène du dispositif de raffinage (30).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008044056 A2
- GB 2468483 A